# EUROPEAN PATENT APPLICATION

(11) **EP 4 827 178 A1**
(43) Date of publication of application: **21.10.2026**
(21) Application number: 23961917.4
(22) Date of filing: 21.12.2023
(51) Int. Cl.: H04W 52/02

(54) **RRM MEASUREMENT METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN)
(74) Representative: Penza, Giancarlo
(86) International application number: PCT/CN2023/140749
(87) International publication number: WO 2025/129582

(57) **Abstract**

The present disclosure belongs to the technical field of communications. Disclosed are a method for RRM management and apparatus, and a device and a storage medium. The method comprises: executing, by means of a first receiver, at least one of cell synchronization and measurement evaluation in RRM measurement. The cell synchronization and measurement evaluation are each executed by means of the first receiver, such that which signal acts as a basis for the first receiver to execute cell synchronization and which signal acts as a basis for the first receiver to execute measurement evaluation can be clearly determined, thereby avoiding disorder occurring when the first receiver executes RRM measurement.

## Description

### TECHNICAL FIELD

Embodiments of the present disclosure relate to the field of communications technologies, and in particular, to a method and apparatus for radio resource management (RRM) measurement, a device, and a storage medium.

### BACKGROUND

In related technologies, by introducing a wake-up receiver (WUR) to receive wake-up signal(s) (WUS(s)), a terminal device can perform RRM measurement by using a low-power WUR, without waking up a main receiver with relatively high-power consumption to perform RRM measurement, thereby reducing power consumption of the terminal device.

However, in the above scenario where the WUR is used for RRM measurement, what signal(s) is(are) arranged to perform cell synchronization and what signal(s) is(are) arranged to perform measurement evaluation are still problems to be solved.

### SUMMARY

Embodiments of the present disclosure provide a method for RRM management, apparatus, device and storage medium. The technical solutions are as follows.

According to one aspect of the embodiments of the present disclosure, a method for RRM management is provided, which is performed by a terminal device, the terminal device having a first receiver and a second receiver, and power consumption of the first receiver being less than power consumption of the second receiver. The method includes that,
at least one of cell synchronization or measurement evaluation in RRM measurement is performed through the first receiver.

According to another aspect of the embodiments of the present disclosure, a method for RRM management is provided, which is performed by a network device. The method includes
transmitting signal configuration, where the signal configuration is arranged to configure time-frequency resources for at least one type of signal(s);
wherein the at least one type of signal(s) is(are) configured for a first receiver of a terminal device to perform at least one of cell synchronization or measurement evaluation in RRM measurement, the terminal device having the first receiver and the second receiver, and power consumption of the first receiver being less than power consumption of the second receiver.

According to another aspect of the embodiments of the present disclosure, an apparatus for RRM measurement is provided. The apparatus has a first receiver and a second receiver, and power consumption of the first receiver is less than power consumption of the second receiver. The apparatus includes: a performing module, arranged to perform, through the first receiver, at least one of cell synchronization or measurement evaluation in RRM measurement.

According to another aspect of the embodiments of the present disclosure, an apparatus for RRM measurement is provided. The apparatus includes:
a transmitting module, configured to transmit signal configuration, where the signal configuration is arranged to configure time-frequency resources for at least one type of signal(s);
wherein the at least one type of signal(s) is(are) arranged to perform, through a first receiver of a terminal device, at least one of cell synchronization or measurement evaluation in RRM measurement, the terminal device having the first receiver and the second receiver, and power consumption of the first receiver being less than power consumption of the second receiver.

According to another aspect of the embodiments of the present disclosure, a communications device is provided. The communications device includes:
a processor;
a transceiver connected to the processor;
a memory configured to store executable instructions of the processor;
wherein the processor is configured to load and execute the executable instructions to implement the method for RRM management according to the above aspects.

According to another aspect of the embodiments of the present disclosure, a computer-readable storage medium is provided. A computer program is stored in the computer-readable storage medium, and the computer program is loaded and executed by a processor to implement the method for RRM management according to the above aspects.

According to another aspect of the embodiments of the present disclosure, a computer program product or computer program is provided. The computer program product or computer program includes computer instructions, and the computer instructions are stored in a computer-readable storage medium; a processor is configured to read the computer instructions from the computer-readable storage medium, and execute the computer instructions to implement the method for RRM management according to the above aspects.

The technical solutions provided by the embodiments of the present disclosure may include the following beneficial effects:

The first receiver of the terminal device performs at least one of cell synchronization or measurement evaluation in RRM measurement, such that the terminal device can perform RRM measurement through a receiver with relatively low power consumption, avoiding the terminal device from waking up the second receiver with relatively high power consumption through the first receiver when performing RRM measurement, thereby reducing power consumption of the terminal device. Moreover, by performing cell synchronization and measurement evaluation respectively through the first receiver, it can determine the signal based on which cell synchronization is performed through the first receiver and the signal based on which measurement evaluation is performed through the first receiver, thereby avoiding confusion of the first receiver when performing RRM measurement.

### BRIEF DESCRIPTION OF THE DRAWINGS

FIG. 1 is a schematic diagram of a terminal device according to related technologies.
FIG. 2 is a schematic diagram of synchronization signal measurement according to related technologies.
FIG. 3 is a schematic diagram of a communications system according to an embodiment of the present disclosure.
FIG. 4 is a flowchart of a method for RRM management according to an embodiment of the present disclosure.
FIG. 5 is a flowchart of a method for RRM management according to an embodiment of the present disclosure.
FIG. 6 is a flowchart of a method for RRM management according to an embodiment of the present disclosure.
FIG. 7 is a schematic diagram of signal configuration according to an embodiment of the present disclosure.
FIG. 8 is a schematic diagram of an RRM measurement provided by related technologies.
FIG. 9 is a schematic diagram of an RRM measurement provided by related technologies.
FIG. 10 is a flowchart of a method for RRM management according to an embodiment of the present disclosure.
FIG. 11 is a schematic diagram of signal configuration according to an embodiment of the present disclosure.
FIG. 12 is a schematic diagram of signal configuration according to an embodiment of the present disclosure.
FIG. 13 is a flowchart of a method for RRM management according to an embodiment of the present disclosure.
FIG. 14 is a schematic diagram of signal configuration according to an embodiment of the present disclosure.
FIG. 15 is a schematic diagram of signal configuration according to an embodiment of the present disclosure.
FIG. 16 is a flowchart of a method for RRM management according to an embodiment of the present disclosure.
FIG. 17 is a flowchart of a method for RRM management according to an embodiment of the present disclosure.
FIG. 18 is a flowchart of a method for RRM management according to an embodiment of the present disclosure.
FIG. 19 is a structural block diagram of an apparatus for RRM measurement according to an embodiment of the present disclosure.
FIG. 20 is a structural block diagram of an apparatus for RRM measurement according to an embodiment of the present disclosure.
FIG. 21 is a structural schematic diagram of a communications device according to an embodiment of the present disclosure.

### DETAILED DESCRIPTION

To make the objectives, technical solutions and advantages of the present disclosure clearer, the embodiments of the present disclosure will be further described in detail below with reference to the accompanying drawings. Exemplary embodiments will be described in detail herein, examples of which are illustrated in the accompanying drawings. In a case where the following description refers to the accompanying drawings, the same numerals in different drawings represent the same or similar elements unless otherwise indicated. The implementations described in the following exemplary embodiments do not represent all implementations consistent with the present disclosure. Instead, they are merely examples of apparatuses and methods consistent with some aspects of the present disclosure as recited in the appended claims. All other embodiments obtained by a person of ordinary skill in the art without creative efforts based on the embodiments in the present disclosure shall fall within the protection scope of the present disclosure.

The terms used in the present disclosure are for the purpose of describing particular embodiments only and are not intended to limit the present disclosure. As used in this disclosure and the appended claims, the singular forms "a", "said" and "the" are intended to include the plural forms as well, unless the context clearly indicates otherwise. It should also be understood that the term "and/or" as used herein refers to and includes any or all possible combinations of one or more of the associated listed items. It should be understood that although the terms first, second, third, etc. may be used in the present disclosure to describe various information, such information should not be limited to these terms. These terms are only used to distinguish information of the same type from one another. For example, without departing from the scope of the present disclosure, first information may also be called second information, and similarly, second information may also be called first information. Depending on the context, the word "if" as used herein may be interpreted as "in a case where" or "upon" or "in response to a determination".

First, related technologies involved in the embodiments of the present disclosure are introduced:
Terminal energy saving based on WUR:
For further power saving of a terminal device, the 3rd Generation Partnership Project (3GPP) Release 18 (R18) standard considers introducing a wake-up receiver to receive a wake-up signal. A wake-up receiver is a deeper sleep mode, featuring extremely low cost, extremely low complexity and extremely low power consumption, and it mainly receives a wake-up signal by means of envelope detection. In other manners, use of a receiver manner similar to a traditional one is not excluded. In short, the power consumption level of a wake-up receiver is several orders of magnitude lower than that of a traditional sleep mode. Generally, power consumption of a traditional receiver is greater than 100 milliwatts, while that of a low-power receiver may be lower than 1 milliwatt. Therefore, a wake-up signal received by a wake-up receiver is different from a signal borne on a Physical Downlink Control Channel (PDCCH) defined in an existing 3GPP New Radio (NR) standard in terms of modulation mode, waveform and the like. A wake-up signal may be an envelope signal obtained by performing Amplitude Shift Keying (ASK) modulation on a carrier signal. Demodulation of an envelope signal is also mainly completed by driving a low-power circuit based on energy provided by a radio frequency signal, so it may be passive. A wake-up receiver may also be powered by a terminal device. Regardless of the power supply manner, a wake-up receiver greatly reduces power consumption compared with a traditional receiver. A wake-up receiver may be integrated with a terminal device as an additional module of a receiver of the terminal device, or may be separately used as a wake-up function module of a terminal device.

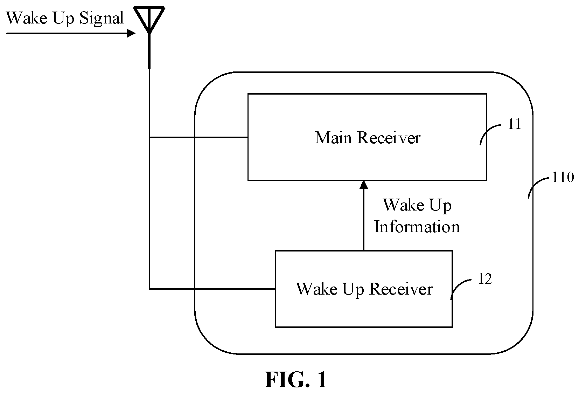

Exemplarily, as shown in FIG. 1, a terminal device 110 includes a main receiver 11 and a wake-up receiver 12. Power consumption of the main receiver 11 is greater than power consumption of the wake-up receiver 12. The wake-up receiver 12 receives a wake-up signal, and indicates the terminal device 110 to turn on the main receiver 11 through wake-up information in a case where the terminal device 110 needs to turn on the main receiver 11; the main receiver 11 may remain in a dormant state in a case where the terminal device 110 does not need to turn on the main receiver 11.

A WUR may receive a wake-up signal and be activated by the wake-up signal at any time. A wake-up signal is mainly an envelope signal obtained by performing ASK modulation on a carrier signal. For example, a WUS signal adopted in 802.11 technologies adopts On-Off Keying (OOK) modulation. The principle of OOK modulation is to modulate the amplitude of a carrier signal into a non-zero value (1) and a zero value (0), corresponding to On and Off respectively, to represent information bits. OOK is also known as binary amplitude shift keying (2-ASK). For example, bit 1 is modulated to On and bit 0 is modulated to Off.

### RRM measurement:

For a wireless mobile communication system, accurate measurement of cell quality and beam quality is a basis for effective implementation of radio resource management and mobility management. For 5G NR, two major types of reference signals are mainly considered as measurement reference signals at present, namely Synchronization Signal and PBCH Block (SSB) and Channel State Information-Reference Signal (CSI-RS).

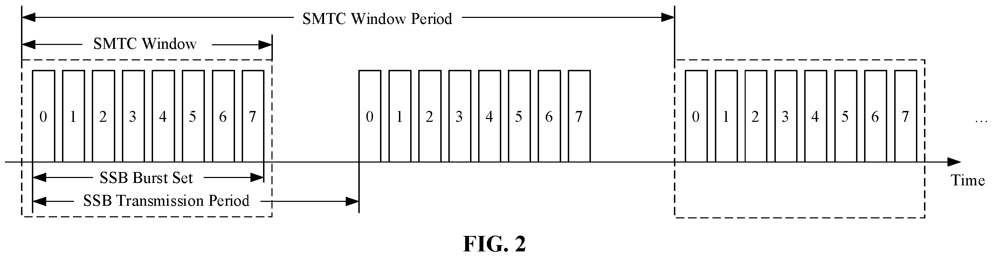

SSB Measurement Timing Configuration (SMTC) is time domain resource configuration information for performing RRM measurement based on SSBs, and is also an important concept newly introduced in 5G NR measurement configuration. It is mainly used to configure a group of measurement time windows for performing RRM measurement based on SSBs, and parameters such as size, position and period of the measurement time windows may be adjusted through configuration parameters. Exemplarily, as shown in FIG. 2, SSBs are transmitted periodically, at least one SSB burst set is transmitted in each SSB transmission period, and each SSB burst set includes at least two SSB bursts. Measurement is performed on SSBs based on SMTC windows, and each SMTC window includes at least one SSB burst set. SMTC windows are configured periodically.

It should be particularly noted that SMTC is configured separately for each frequency point. In a case where a terminal device performs RRM measurement, a set of SMTC configurations is available on each measurement frequency point to indicate available measurement window information on the frequency point. However, this restriction is also gradually relaxed in protocol discussions. In Release 15 (R15), to match different synchronization signal block periods of different cells, two sets of SMTC parameters may be configured for performing RRM measurement during intra-frequency measurement in a connected state. For example, in addition to basic SMTC configurations, another set of relatively dense measurement windows may be configured for use by a serving cell and cells indicated in a specific cell list. In a subsequent Release 16 (R16), the maximum number of SMTC configurations on each frequency point for idle state measurement is also increased to two, so as to further meet flexibility of network operation.

In addition, higher-layer signaling may indicate configuration information of a reference signal arranged to perform RRM measurement through a ReferenceSignalConfig parameter. For RRM measurement performed based on SSBs, an SSB to be measured indication (ssb-ToMeasure) indicates position information of actually transmitted SSBs in an SSB burst set by using a bitmap. A terminal device may clearly know, through the SSB to be measured indication, which SSB candidate positions actually transmit SSBs and which SSB candidate positions do not transmit SSBs. The terminal device does not need to perform RRM measurement at positions where no SSB is transmitted, thereby achieving energy saving of the terminal device.

For CSI-RS-based measurement, a base station may configure one or more CSI-RS resources for a terminal device to perform RRM measurement through higher-layer signaling. First, on a cell basis, higher-layer signaling may provide cell-level CSI-RS configuration parameters, such as a cell identifier, a measurement bandwidth of a cell, and resource density. In addition, since multiple CSI-RS resources may be configured for each cell, parameter configuration further provides configuration information at a CSI-RS resource level, such as a specific CSI-RS index, time domain and frequency domain position information occupied by the CSI-RS resource, and a sequence generation manner.

### RRM measurement relaxation mechanism:

A terminal device in a non-connected state needs to perform RRM measurement on a serving cell and other neighboring cells based on configuration of a network device to support mobility operations, such as cell reselection. In the NR R15 standard, for the purpose of terminal energy saving, in a case where channel quality of a terminal in a serving cell is good, the terminal may not start RRM measurement on intra-frequency points and inter-frequency points of the same priority or low priority, and may increase a measurement gap for RRM measurement on inter-frequency points of high priority. Specifically: In a case where Reference Signal Received Power (RSRP) of a terminal device on a serving cell is higher than SIntraSearchP (a higher-layer configuration threshold parameter), and Reference Signal Receiving Quality (RSRQ) of the terminal device on the serving cell is higher than SIntraSearchQ (a higher-layer configuration threshold parameter), the terminal device may not start RRM measurement on intra-frequency points.

In a case where RSRP of a terminal device on a serving cell is higher than SnonIntraSearchP (a higher-layer configuration threshold parameter), and RSRQ of the terminal device on the serving cell is higher than SnonIntraSearchQ (a higher-layer configuration threshold parameter), the terminal device may not start RRM measurement on inter-frequency and inter-system low-priority and same-priority frequency points. Meanwhile, for inter-frequency and inter-system high-priority frequency points, the terminal device may start relaxed RRM measurement.

For a terminal device that needs to perform RRM measurement, it is necessary to introduce an RRM measurement relaxation mechanism to further meet power saving requirements of the terminal device.

The NR R16 standard introduces two sets of measurement relaxation criteria for RRM measurement of a terminal device in a non-connected state, namely a "terminal not at cell edge" criterion and a "low mobility" criterion. Both criteria are measured based on a measurement result of a terminal device on a serving cell. The two criteria are introduced respectively below.

### "Terminal not at cell edge" criterion:

For this criterion, a network device configures an RSRP threshold, and may further configure an RSRQ threshold. In a case where RSRP of a terminal device on a serving cell is greater than the RSRP threshold, and/or RSRQ of the terminal device on the serving cell is greater than the RSRQ threshold, it is considered that the terminal device meets the "terminal not at cell edge" criterion.

The RSRP threshold configured by a network for the "terminal not at cell edge" criterion needs to be smaller than SIntraSearchP and SnonIntraSearchP. If the network also configures an RSRQ threshold for the "terminal not at cell edge" criterion, the RSRQ threshold for the "terminal not at cell edge" criterion needs to be smaller than SIntraSearchQ and SnonIntraSearchQ.

### "Low mobility" criterion:

For this criterion, a network device configures an evaluation duration of RSRP change and an RSRP change value threshold. In a case where an RSRP change amount of a terminal device on a serving cell within the evaluation duration of RSRP change is smaller than the RSRP change value threshold, it is considered that the terminal device meets the "low mobility" criterion.

It should be pointed out that Release 17 (R17) further enhances the "low mobility" criterion introduced in R16, and the main change is to introduce a second RSRP change value threshold and a second evaluation duration of RSRP change to support further relaxation of measurement in a low mobility scenario.

For RRM measurement on frequency points of the same priority or low priority, in a case where a terminal device meets the "terminal not at cell edge" criterion and/or the "low mobility" criterion, the terminal device uses a longer measurement gap when performing RRM measurement.

### RRM measurement requirements in connected state:

Including intra-frequency measurement and inter-frequency measurement, where an SMTC period is mainly considered when performing RRM measurement without a Measurement Gap (without MG); and both SMTC and Measurement Gap Repetition Period (MGRP) need to be considered when performing RRM measurement within a Measurement Gap (with MG).

Related protocols determine whether an MG is required for measurement according to the following rules:
Intra-frequency SSB:
In a case where a terminal device indicates 'no-gap' through intraFreq-needForGap, or an SSB is within a currently active Bandwidth Part (BWP) of the terminal device, or a current downlink BWP is an initial downlink BWP, the terminal device has the capability of performing intra-frequency SSB measurement without using a measurement gap. Whether actual measurement is performed within an MG may be further determined according to a relationship between SMTC and MG.

For an intra-frequency SSB and a Measurement Object (MO) that may not require an MG:
In a case where an associated SMTC does not overlap with an MG occasion at all, measurement is performed outside the MG;
In a case where an associated SMTC partially overlaps with an MG occasion, measurement is performed outside the MG;
In a case where an associated SMTC completely overlaps with an MG occasion, measurement is performed within the MG.

For an intra-frequency SSB and an MO that may require an MG, measurement can only be performed within the MG (regardless of the relationship between SMTC and MG).

### Inter-frequency SSB:

In a case where a terminal device supports an interFrequencyMeas-Nogap-r16 capability, a network device indicates interFrequencyConfig-NoGap-r16, and an inter-frequency SSB is within an active BWP, the terminal device has the capability of performing inter-frequency SSB measurement without using a measurement gap. Whether actual measurement is performed within an MG may be further determined according to a relationship between SMTC and MG.

For an inter-frequency SSB and an MO that may not require an MG:
In a case where an associated SMTC does not overlap with an MG occasion at all and the above interFrequencyMeas-NoGap-r16 and interFrequencyConfig-NoGap-r16 conditions are met, measurement is performed outside the MG;
In a case where an associated SMTC partially overlaps with an MG occasion and the above interFrequencyMeas-NoGap-r16 and interFrequencyConfig-NoGap-r16 conditions are met, for a terminal device supporting a Carrier Aggregation (CA) capability, measurement is performed outside the MG;
In a case where an associated SMTC completely overlaps with an MG occasion, measurement is performed within the MG;
In a case where an associated SMTC partially overlaps with an MG occasion, for a terminal device not supporting a CA capability, measurement is performed within the MG.

For an inter-frequency SSB and an MO that may require an MG, measurement can only be performed within the MG.

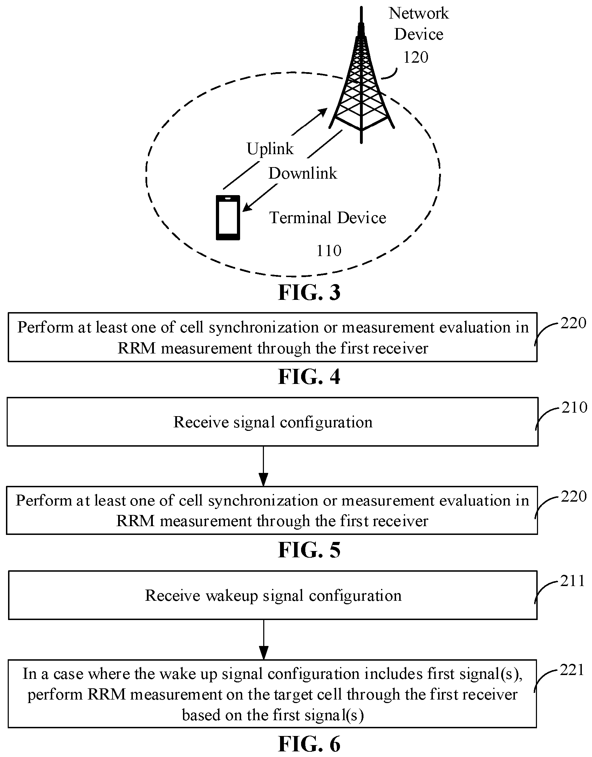

FIG. 3 is a schematic diagram of a communication system according to an exemplary embodiment of the present disclosure. The communication system 100 includes a terminal device 110 and a network device 120.

The terminal device 110 in the embodiments of the present disclosure may also be referred to as User Equipment (UE), access terminal, subscriber unit, subscriber station, mobile station, mobile console, remote station, remote terminal, mobile device, user terminal, terminal, wireless communication device, user agent, or user apparatus. The terminal includes, but is not limited to: handheld devices, wearable devices, in-vehicle devices, Internet of Things devices, etc., such as mobile phones, tablet computers, e-book readers, laptop computers, desktop computers, televisions, game consoles, Mobile Internet Devices (MID), Augmented Reality (AR) terminals, Virtual Reality (VR) terminals, Mixed Reality (MR) terminals, wearable devices, gamepads, electronic tags, controllers, wireless terminals in Industrial Control, wireless terminals in Self Driving, wireless terminals in Remote Medical, wireless terminals in Smart Grid, wireless terminals in Transportation Safety, wireless terminals in Smart City, wireless terminals in Smart Home, wireless terminals in Remote Medical Surgery, cellular phones, cordless telephones, Session Initiation Protocol (SIP) phones, Wireless Local Loop (WLL) stations, Personal Digital Assistants (PDA), Set Top Boxes (STB), Customer Premise Equipment (CPE), etc.

The network device 120 in the embodiments of the present disclosure provides a wireless communication function. The network device 120 includes, but is not limited to: Evolved Node B (eNB), Radio Network Controller (RNC), Node B (NB), Base Station Controller (BSC), Base Transceiver Station (BTS), home base stations (e.g., Home Evolved Node B or Home Node B, HNB), Baseband Units (BBU), Access Points (AP) in Wireless Fidelity (Wi-Fi) systems, wireless relay nodes, wireless backhaul nodes, Transmission Points (TP), Transmission and Reception Points (TRP), etc. It may also be a Next Generation Node B (gNB) or transmission point (TRP or TP) in a fifth-generation (5th Generation, 5G) mobile communication system, or one or a group of antenna panels (including multiple antenna panels) of a base station in a 5G system, or a network node constituting a gNB or transmission point, such as a Baseband Unit (BBU) or Distributed Unit (DU), etc., or base stations in Beyond Fifth Generation (B5G) mobile communication systems, sixth-generation (6th Generation, 6G) mobile communication systems, etc., or Core Network (CN), Fronthaul, Backhaul, Radio Access Network (RAN), network slicing, etc., or serving cells, Primary Cells (PCell), Primary Secondary Cells (PSCell), Special Cells (SpCell), Secondary Cells (SCell), neighboring cells, etc. of the terminal device.

The terminal device 110 and the network device 120 communicate with each other through a certain air interface technology. Exemplarily, there are two communication scenarios between the terminal device 110 and the network device 120: an uplink communication scenario and a downlink communication scenario. Uplink communication refers to the terminal device 110 transmitting signals to the network device 120; downlink communication refers to the network device 120 transmitting signals to the terminal device 110.

The technical solutions provided in the embodiments of the present disclosure can be applied to various communication systems, such as: Global System of Mobile communication (GSM) systems, Code Division Multiple Access (CDMA) systems, Wideband Code Division Multiple Access (WCDMA) systems, General Packet Radio Service (GPRS), Long Term Evolution (LTE) systems, LTE Frequency Division Duplex (FDD) systems, LTE Time Division Duplex (TDD) systems, Advanced Long Term Evolution (LTE-A) systems, Universal Mobile Telecommunication System (UMTS), Worldwide Interoperability for Microwave Access (WiMAX) communication systems, 5G mobile communication systems, NR systems, evolved systems of NR systems, LTE-based access to unlicensed spectrum (LTE-U) systems, NR-based access to unlicensed spectrum (NR-U) systems, Terrestrial Networks (TN) systems, Non-Terrestrial Networks (NTN) systems, Wireless Local Area Networks (WLAN), Wi-Fi, cellular Internet of Things systems, cellular passive Internet of Things systems. They can also be applied to evolved systems subsequent to the 5G NR system, as well as to B5G, 6G and subsequent evolved systems.

In some embodiments of the present disclosure, "NR" may also be referred to as a 5G NR system or a 5G system. The 5G mobile communication system may include Non-Standalone (NSA) and/or Standalone (SA) networking. The technical solutions provided in the embodiments of the present disclosure can also be applied to Machine Type Communication (MTC), Long Term Evolution-Machine (LTE-M), Device to Device (D2D) networks, Machine to Machine (M2M) networks, Internet of Things (IoT) networks, or other networks. The IoT network may include, for example, the Internet of Vehicles. Communication modes in the Internet of Vehicles system are collectively referred to as Vehicle to X (V2X, where X may represent anything). For example, the V2X may include: Vehicle to Vehicle (V2V) communication, Vehicle to Infrastructure (V2I) communication, Vehicle to Pedestrian (V2P) communication, or Vehicle to Network (V2N) communication, etc.

It should be understood that, in the description of the embodiments of the present disclosure, the term "correspond" may indicate a direct correspondence or an indirect correspondence between the two, may also indicate an association relationship between the two, or a relationship of indicating and being indicated, configuring and being configured, etc. In the embodiments of the present disclosure, "predefined" may be implemented by pre-storing corresponding codes, tables or other manners for indicating relevant information in devices (e.g., including terminal devices and network devices). The present disclosure does not limit the specific implementation manner thereof. For example, predefined may refer to being defined in a protocol. In the embodiments of the present disclosure, "protocol" may refer to a standard protocol in the communication field, for example, may include LTE protocol, NR protocol, Internet of Things protocol, and related protocols applied to future communication systems, which is not limited in the present disclosure.

The terminal device 110 involved in the embodiments of the present disclosure may be an active device. An active device refers to a device having its own power supply and capable of actively generating and transmitting signals, such as mobile phones, computers, smart watches, smart bracelets, etc. It may also be a passive device. A passive device refers to a device that does not require power supply or can operate by receiving energy from other devices, and may be referred to as a zero-power device, zero-power terminal, low-power device, low-power terminal, etc. It may also be a device that obtains energy from the environment, and may be referred to as an ambient energy Internet of Things device. It may also be a device deployed at a fixed location, and may be referred to as a zero-power site, low-power site, etc., or a terminal having a Low Power Wake-Up Receiver (LP-WUR) in a cellular system.

The terminal device 110 involved in the embodiments of the present disclosure has a first receiver and a second receiver, and power consumption of the first receiver is less than power consumption of the second receiver. In some embodiments, the first receiver may also be referred to as a wake-up receiver, and the second receiver may also be referred to as a main receiver. The embodiments of the present disclosure propose a method for RRM management, which can determine, in a case where the first receiver is arranged to perform cell synchronization and measurement evaluation, the signal based on which cell synchronization is performed through the first receiver through the first receiver and the signal based on which measurement evaluation is performed through the first receiver. FIG. 4 is a flowchart of a method for RRM management according to an exemplary embodiment of the present disclosure. The method is performed by a terminal device. The method includes the following operations.

At operation 220, at least one of cell synchronization or measurement evaluation in RRM measurement is performed through the first receiver.

In some embodiments, the terminal device receives signal configuration transmitted by a network device, where the signal configuration is arranged to configure time-frequency resources for at least one type of signal(s), and the at least one type of signal(s) is(are) arranged to perform, through the first receiver, at least one of cell synchronization or measurement evaluation. Or in other words, the signal configuration is arranged to configure first time-frequency resources for the first receiver to monitor signals arranged to perform cell synchronization, and/or configure second time-frequency resources for the first receiver to monitor signals arranged to perform measurement evaluation. In the embodiments of the present disclosure, the term "monitor" may be understood as at least one of detecting, measuring or receiving.

In some embodiments, the terminal device receives signal configuration corresponding to a signal arranged to perform cell synchronization transmitted by the network device. Based on the signal configuration, the terminal device monitors, through the first receiver on the first time-frequency resources, the signal arranged to perform cell synchronization.

In some embodiments, the terminal device receives signal configuration corresponding to a signal arranged to perform measurement evaluation transmitted by the network device. Based on the signal configuration, the terminal device monitors, through the first receiver on the second time-frequency resources, the signal arranged to perform measurement evaluation.

In some embodiments, the terminal device receives signal configuration corresponding to signals arranged to perform cell synchronization and measurement evaluation transmitted by the network device. Based on the signal configuration, the terminal device monitors, through the first receiver on third time-frequency resources, the signal arranged to perform cell synchronization and measurement evaluation.

In some embodiments, the signal arranged to perform cell synchronization and the signal arranged to perform measurement evaluation are the same signal, or the same group of signals. For example, a first signal is arranged to perform both cell synchronization and measurement evaluation. Optionally, the first signal is a Lower-power Synchronization Signal (LP-SS), for example, the first signal is an LP-SSB. In some embodiments, the signal arranged to perform cell synchronization and the signal arranged to perform measurement evaluation are different signals. For example, the signal arranged to perform cell synchronization is an LP-SS, and the signal arranged to perform measurement evaluation is an LP-RS.

In some embodiments, an RRM measurement time for the terminal device to perform RRM measurement meets a measurement time requirement.

In a further embodiment based on the embodiment shown in FIG. 4 above, FIG. 5 is a flowchart of a method for RRM management according to an exemplary embodiment of the present disclosure. The method is performed by a terminal device. The method further includes the following operations.

At operation 210, signal configuration is received.

In some embodiments, the signal configuration is arranged to configure time-frequency resources for at least one type of signal(s). Optionally, the at least one type of signal(s) includes at least one of the following:
first signal(s);
second signal(s);
third signal(s); or
WUS(s).

In some embodiments, the first signal(s) is(are) arranged to perform cell synchronization and measurement evaluation.

Optionally, the signal arranged to perform cell synchronization and the signal arranged to perform measurement evaluation are two types of signals. For example, the signal arranged to perform cell synchronization is a first sub-signal in the first signal(s), and the signal arranged to perform measurement evaluation is a second sub-signal in the first signal(s). Different sub-signals are arranged to implement different functions.

Optionally, the signal arranged to perform cell synchronization and the signal arranged to perform measurement evaluation are the same type of signal(s). For example, an LP-SS is arranged to perform both cell synchronization and measurement evaluation. That is, one type of signal(s) can implement multiple functions.

In some embodiments, the first signal(s) is(are) signal(s) having a first waveform, where the first waveform is obtained based on multi-carrier modulation. Multi-carrier refers to a modulation technique using multiple carriers within a fixed frequency band, such as Orthogonal Frequency Division Multiplexing (OFDM). Or, the first signal(s) is(are) signal(s) having a second waveform, where the second waveform is obtained based on single-carrier modulation. Single-carrier refers to a modulation technique using only one carrier within a fixed frequency band, such as 2-ASK.

In some embodiments, the second signal(s) is(are) arranged to perform cell synchronization.

It should be understood that the second signal(s) herein is(are) signal(s) only arranged to perform cell synchronization, or may be understood as a sub-signal arranged to perform cell synchronization in the first signal(s) above.

In some embodiments, the second signal(s) is(are) signal(s) having a first waveform, where the first waveform is obtained based on multi-carrier modulation, such as OFDM. Or, the second signal(s) is(are) signal(s) having a second waveform, where the second waveform is obtained based on single-carrier modulation, such as 2-ASK.

In some embodiments, the third signal(s) is(are) arranged to perform measurement evaluation.

It should be understood that the third signal(s) herein may also be a signal arranged to perform cell synchronization and measurement evaluation. Or in other words, the third signal(s) is(are) a sub-signal arranged to perform measurement evaluation in the first signal(s) above.

In some embodiments, the third signal(s) is(are) signal(s) having a first waveform, where the first waveform is obtained based on multi-carrier modulation, such as OFDM. Or, the third signal(s) is(are) signal(s) having a second waveform, where the second waveform is obtained based on single-carrier modulation, such as 2-ASK.

In some embodiments, the WUS(s) is(are) signal(s) having a first waveform, where the first waveform is obtained based on multi-carrier modulation, such as OFDM. Or, the WUS(s) is(are) signal(s) having a second waveform, where the second waveform is obtained based on single-carrier modulation, such as 2-ASK.

In some embodiments, the configuration manner of the above signal configuration includes one or more of the following:
Configuration manner 1: wake-up signal configuration. The wake-up signal configuration is arranged to configure time-frequency resources for the first receiver to monitor the wake-up signal. The wake-up signal configuration includes first signal(s), where the first signal(s) is(are) arranged to perform cell synchronization and measurement evaluation. Or in other words, the wake-up signal configuration is arranged to configure time-frequency resources for the first receiver to monitor the first signal(s), where the time-frequency resources for monitoring the first signal(s) are at least one time-frequency resource among the time-frequency resources for monitoring the wake-up signal. The first receiver monitors the first signal(s) on the at least one time-frequency resource for monitoring the wake-up signal.
Configuration manner 2: mutually independent wake-up signal configuration and first signal configuration. The wake-up signal configuration is arranged to configure time-frequency resources for the first receiver to monitor the wake-up signal. The first signal configuration is arranged to configure time-frequency resources for the first receiver to monitor the first signal(s), where the first signal(s) is(are) arranged to perform cell synchronization and measurement evaluation.
Configuration manner 3: mutually independent wake-up signal configuration and third signal configuration. The wake-up signal configuration is arranged to configure time-frequency resources for the first receiver to monitor the wake-up signal. The wake-up signal configuration includes second signal(s), where the second signal(s) is(are) arranged to perform cell synchronization. Or in other words, the wake-up signal configuration is arranged to configure time-frequency resources for the first receiver to monitor the second signal(s), where the time-frequency resources for monitoring the second signal(s) are at least one time-frequency resource among the time-frequency resources for monitoring the wake-up signal. The first receiver monitors the second signal(s) on the at least one time-frequency resource for monitoring the wake-up signal. The third signal configuration is arranged to configure time-frequency resources for the first receiver to monitor the third signal(s), where the third signal(s) is(are) arranged to perform measurement evaluation.
Configuration manner 4: mutually independent wake-up signal configuration, second signal configuration and third signal configuration. The wake-up signal configuration is arranged to configure time-frequency resources for the first receiver to monitor the wake-up signal. The second signal configuration is arranged to configure time-frequency resources for the first receiver to monitor the second signal(s), where the second signal(s) is(are) arranged to perform cell synchronization. The third signal configuration is arranged to configure time-frequency resources for the first receiver to monitor the third signal(s), where the third signal(s) is(are) arranged to perform measurement evaluation.

In summary, in the method according to this embodiment, the first receiver of the terminal device performs at least one of cell synchronization or measurement evaluation in RRM measurement, so that the terminal device can perform RRM measurement using a receiver with low power consumption, avoiding the terminal device from waking up the second receiver with high power consumption through the first receiver during RRM measurement, thereby reducing power consumption of the terminal device. Moreover, by performing cell synchronization and measurement evaluation respectively through the first receiver, it can determine the signal based on which cell synchronization is performed through the first receiver and the signal based on which measurement evaluation is performed through the first receiver, thereby avoiding confusion of the first receiver when performing RRM measurement.

For configuration manner 1:
In a further embodiment based on the embodiment shown in FIG. 5 above, FIG. 6 is a flowchart of a method for RRM management according to an exemplary embodiment of the present disclosure. The above operation 210 may be replaced with the following sub-operations:

At operation 211, WUS configuration is received.

In some embodiments, the wake-up signal configuration is arranged to configure time-frequency resources for the first receiver to monitor the wake-up signal. In some embodiments, the wake-up signal configuration includes first signal(s). Or in other words, the wake-up signal configuration is arranged to configure time-frequency resources for the first receiver to monitor the first signal(s), where the time-frequency resources for monitoring the first signal(s) are at least one time-frequency resource among the time-frequency resources for monitoring the wake-up signal. The first receiver monitors the first signal(s) on the at least one time-frequency resource for monitoring the wake-up signal.

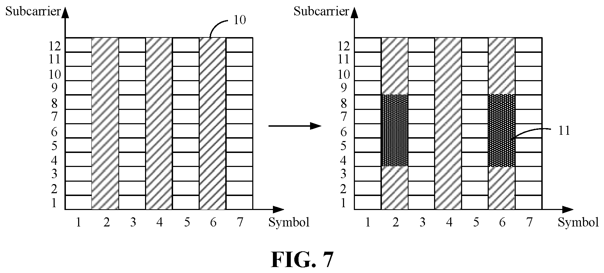

Exemplarily, as shown in FIG. 7, the wake-up signal configuration is arranged to configure time-domain resources for the first receiver to monitor the wake-up signal 10 as symbol 2, symbol 4 and symbol 6, and also configure time-domain resources for the first receiver to monitor the first signal 11 as symbol 2 and symbol 6.

In some embodiments, the terminal device monitors the wake-up signal (WUS) in units of WUR monitoring occasions, or in other words, the terminal device monitors the WUS(s) in units of WUR burst monitoring occasions. In some embodiments, the terminal device monitors the WUS(s) in units of WUR burst set monitoring occasions, where each WUS burst set includes at least one WUS burst. The WUS burst may refer to an SSB burst.

In some embodiments, the WUS(s) is(are) periodic. In some embodiments, the WUS(s) is(are) aperiodic.

In some embodiments, the wake-up signal configuration is arranged to configure time-frequency resources for aperiodic WUS burst(s), where each or at least one WUS burst includes at least one first signal. The at least one first signal is periodic, or the at least one first signal is aperiodic.

In some embodiments, the wake-up signal configuration is arranged to configure time-frequency resources for periodic WUS burst(s), where each or at least one WUS burst includes at least one first signal. The at least one first signal is periodic, or the at least one first signal is aperiodic.

In some embodiments, the above operation 220 may be replaced with the following sub-operation:
At operation 221, in a case where the wake-up signal configuration includes first signal(s), RRM measurement is performed on a target cell through the first receiver based on the first signal(s).

In some embodiments, the first signal(s) is(are) arranged to perform cell synchronization and measurement evaluation.

Optionally, the signal arranged to perform cell synchronization and the signal arranged to perform measurement evaluation are two types of signals. For example, the signal arranged to perform cell synchronization is a first sub-signal in the first signal(s), and the signal arranged to perform measurement evaluation is a second sub-signal in the first signal(s). Different sub-signals are arranged to implement different functions.

Optionally, the signal arranged to perform cell synchronization and the signal arranged to perform measurement evaluation are the same type of signal(s). For example, an LP-SS is arranged to perform both cell synchronization and measurement evaluation. That is, one type of signal(s) can implement multiple functions.

In some embodiments, the first signal(s) is(are) signal(s) having a first waveform, or the first signal(s) is(are) signal(s) having a second waveform. The first waveform is obtained based on multi-carrier modulation, and the second waveform is obtained based on single-carrier modulation. Single-carrier refers to a modulation technique using only one carrier within a fixed frequency band, such as 2-ASK. Multi-carrier refers to a modulation technique using multiple carriers within a fixed frequency band, such as OFDM.

In some embodiments, the first signal(s) is(are) obtained based on multi-carrier modulation, or the first signal(s) is(are) obtained based on single-carrier modulation. The single-carrier modulation manner includes at least one of single-carrier amplitude modulation, single-carrier frequency modulation, and single-carrier phase modulation.

Optionally, the first signal(s) is(are) signal(s) of the first waveform modulated based on multi-carrier modulation, such as an SSB.

Optionally, the first signal(s) is(are) signal(s) of the second waveform modulated based on single-carrier modulation, such as an LP-SS.

In some embodiments, the operation of performing, through the first receiver, RRM measurement on a target cell based on the first signal(s) includes: performing, through the first receiver, at least one of cell synchronization or measurement evaluation on the target cell based on the first signal(s). Optionally, cell synchronization is performed on the target cell through the first receiver based on the first signal(s). Optionally, measurement evaluation is performed on the target cell through the first receiver based on the first signal(s). Optionally, cell synchronization and measurement evaluation is performed on the target cell through the first receiver based on the first signal(s).

In some embodiments, measurement evaluation is performed on the target cell through the first receiver based on the first signal(s), in a case where the target cell meets a first condition; alternatively, cell synchronization and measurement evaluation are performed on the target cell through the first receiver based on the first signal(s), in a case where the target cell meets a second condition.

In some embodiments, the target cell and the serving cell are intra-frequency cells. The serving cell is a cell where the terminal device is currently located, and the target cell is a neighbor cell of the serving cell.

In a case where the target cell is an intra-frequency cell, measurement evaluation is performed on the intra-frequency cell through the first receiver based on the first signal(s).

In some embodiments, in a case where the target cell and the serving cell are intra-frequency cells, the terminal device generally does not need to acquire time information of the target cell any more, but can directly refer to time information of the serving cell. That is, the time information of the intra-frequency cell is determined based on the time information of the serving cell. In this case, the terminal device does not need to detect a synchronization signal or perform cell synchronization.

In some embodiments, in a case where the target cell is an intra-frequency cell and no measurement gap is required, measurement evaluation is performed on the intra-frequency cell through the first receiver according to a period of the first signal(s).

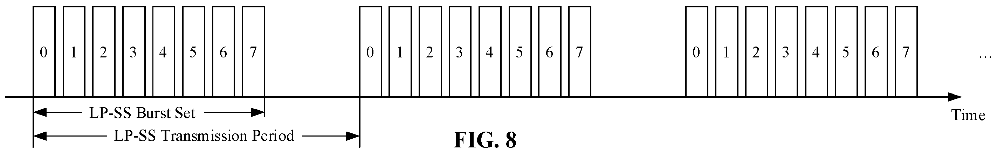

Exemplarily, as shown in FIG. 8, taking the first signal(s) being an LP-SS as an example, each LP-SS burst set is transmitted according to an LP-SS transmission period, and each LP-SS burst set includes at least one LP-SS burst. Optionally, measurement evaluation is performed on the intra-frequency cell through the first receiver according to the LP-SS transmission period.

In some embodiments, in a case where the target cell is an intra-frequency cell and a measurement gap is required, measurement evaluation is performed on the intra-frequency cell through the first receiver according to a period of the measurement gap. The measurement gap overlaps with a time-domain position of at least one first signal.

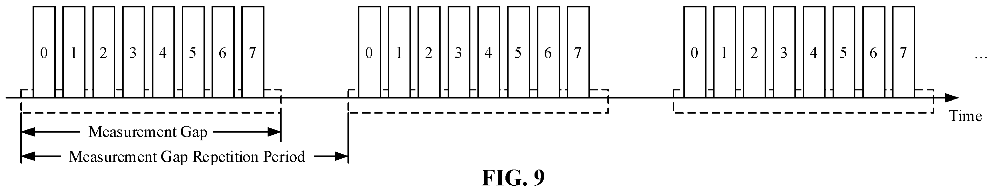

Exemplarily, as shown in FIG. 9, taking the first signal(s) being an LP-SS as an example, measurement evaluation is performed on the intra-frequency cell through the first receiver according to the period of the measurement gap. Each measurement gap overlaps with a time-domain position of at least one LP-SS burst set, and each LP-SS burst set includes at least one LP-SS burst.

In a case where the target cell is an intra-frequency cell, the RRM measurement time for the terminal device to perform RRM measurement includes the time for performing measurement evaluation on the intra-frequency cell. For example, assuming that measurement evaluation is performed on the intra-frequency cell through the first receiver according to 3 LP-SS transmission periods, the RRM measurement time includes a duration of 3 LP-SS transmission periods.

In some embodiments, the target cell and the serving cell are inter-frequency cells. The serving cell is a cell where the terminal device is currently located, and the target cell is a neighbor cell of the serving cell.

In a case where the target cell is an inter-frequency cell and the inter-frequency cell meets a target condition, measurement evaluation is performed on the inter-frequency cell through the first receiver based on the first signal(s).

In some embodiments, the target condition includes one or more of the following:
the inter-frequency cell and the serving cell belong to the same frequency band; and
the power difference between the inter-frequency cell and the serving cell is less than a preset threshold.

In some embodiments, in a case where the inter-frequency cell meets the target condition, the terminal device generally does not need to acquire time information of the target cell any more, but can directly refer to time information of the serving cell. That is, the time information of the inter-frequency cell is determined based on the time information of the serving cell. In this case, the terminal device does not need to detect a synchronization signal or perform cell synchronization.

Optionally, in a case where the inter-frequency cell and the serving cell belong to cells of the same frequency band, the time information of the inter-frequency cell is determined based on the time information of the serving cell.

Optionally, in a case where the power difference between the inter-frequency cell and the serving cell is less than a preset threshold, the time information of the inter-frequency cell is determined based on the time information of the serving cell. Optionally, the preset threshold is 6 dB, and in a case where the power difference between the inter-frequency cell and the serving cell is less than 6 dB, the time information of the inter-frequency cell is determined based on the time information of the serving cell. Optionally, the preset threshold is 9 dB, and in a case where the power difference between the inter-frequency cell and the serving cell is less than 9 dB, the time information of the inter-frequency cell is determined based on the time information of the serving cell.

In some embodiments, in a case where the target cell is an inter-frequency cell, the inter-frequency cell meets the target condition, and no measurement gap is required, measurement evaluation is performed on the inter-frequency cell through the first receiver according to the period of the first signal(s).

Exemplarily, as shown in FIG. 8, taking the first signal(s) as an LP-SS for example, each LP-SS burst set is transmitted according to an LP-SS transmission period, and each LP-SS burst set includes at least one LP-SS burst. Optionally, measurement evaluation is performed on the inter-frequency cell through the first receiver according to the LP-SS transmission period.

In some embodiments, in a case where the target cell is an inter-frequency cell, the inter-frequency cell meets the target condition, and a measurement gap is required, measurement evaluation is performed on the intra-frequency cell through the first receiver according to the period of the measurement gap. The measurement gap overlaps with a time-domain position of at least one first signal.

Exemplarily, as shown in FIG. 9, taking the first signal as an LP-SS for example, measurement evaluation is performed on the intra-frequency cell through the first receiver according to the period of the measurement gap. Each measurement gap overlaps with a time-domain position of at least one LP-SS burst set, and each LP-SS burst set includes at least one LP-SS burst.

In a case where the target cell is an inter-frequency cell and the inter-frequency cell meets the target condition, the RRM measurement time for the terminal device to perform RRM measurement includes the time for performing measurement evaluation on the inter-frequency cell. For example, assuming that measurement evaluation is performed on the inter-frequency cell through the first receiver according to 3 LP-SS transmission periods, the RRM measurement time includes a duration of 3 LP-SS transmission periods.

In a case where the target cell is an inter-frequency cell and the inter-frequency cell does not meet the target condition, synchronization and measurement evaluation are performed on the inter-frequency cell through the first receiver based on the first signal(s).

In some embodiments, in a case where the inter-frequency cell does not meet the target condition, the terminal device first performs cell synchronization based on the first signal(s), and then performs measurement evaluation based on the first signal(s) after cell synchronization. Through the first receiver, cell synchronization is performed based on n first signals and measurement evaluation is performed on the inter-frequency cell based on m first signals, where the n first signals and the m first signals are consecutive (n+m) first signals, where n is a positive integer, and m is a positive integer.

In a case where the target cell is an inter-frequency cell and the inter-frequency cell does not meet the target condition, the RRM measurement time for the terminal device to perform RRM measurement includes the time for performing cell synchronization and the time for performing measurement evaluation on the inter-frequency cell. Optionally, the RRM measurement time includes the time for performing cell synchronization using n first signals and the time for performing measurement evaluation using m first signals. For example, assuming that through the first receiver, cell synchronization is performed on the inter-frequency cell according to 2 LP-SS transmission periods, and then measurement evaluation is performed on the inter-frequency cell according to 3 LP-SS transmission periods, the RRM measurement time includes a duration of 2 LP-SS transmission periods + 3 LP-SS transmission periods = 5 LP-SS transmission periods.

In summary, in the method according to this embodiment, by receiving WUS configuration for configuring the first receiver to monitor the first signal(s) on at least one time-frequency resource for monitoring WUS(s), the terminal device can perform RRM measurement through the first receiver based on the wake-up signal configuration. Moreover, based on the wake-up signal configuration, it can be clarified that cell synchronization is performed based on the first signal(s) and measurement evaluation is performed based on the first signal(s).

In the embodiment of the present disclosure, one wake-up signal configuration further enables monitoring of the first signal(s) simultaneously on at least one time-frequency resource for monitoring WUS(s), and the terminal device can monitor the first signal(s) while monitoring the wake-up signal, so that the terminal device can allocate power consumption more efficiently, thereby further reducing power consumption.

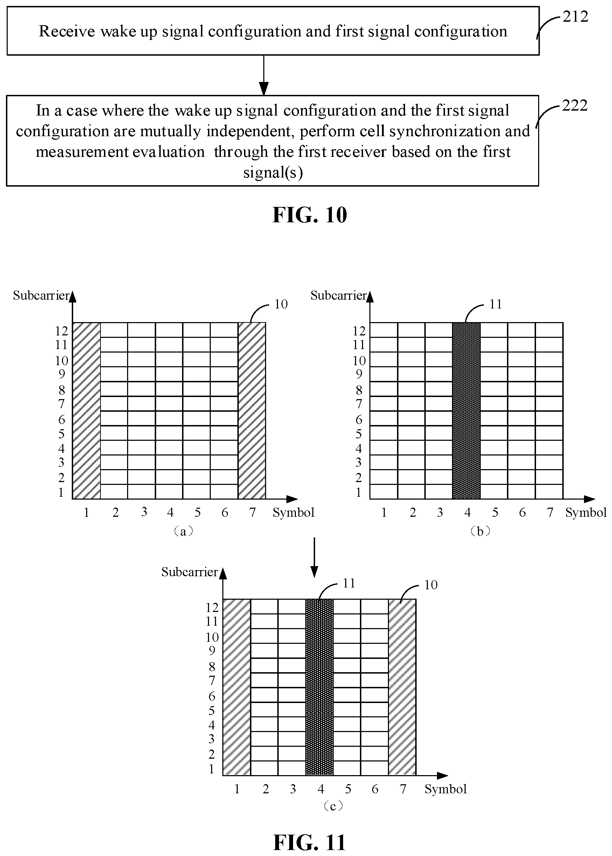

For configuration manner 2:
In a further embodiment based on the embodiment shown in FIG. 5 above, FIG. 10 is a flowchart of a method for RRM management according to an exemplary embodiment of the present disclosure. The above operation 210 may also be replaced with the following sub-operations.

At operation 212, wake-up signal configuration and first signal configuration are received.

In some embodiments, the wake-up signal configuration is arranged to configure time-frequency resources for the first receiver to monitor WUS(s). The first signal configuration is arranged to configure time-frequency resources for the first receiver to monitor first signal(s), where the first signal(s) is arranged to perform cell synchronization and measurement evaluation. The wake-up signal configuration and the first signal configuration are two mutually independent signal configurations.

Exemplarily, as shown in (a) of FIG. 11, the wake-up signal configuration is arranged to configure time-domain resources for the first receiver to monitor the wake-up signal 10 as symbol 1 and symbol 7. As shown in (b) of FIG. 11, the first signal configuration is arranged to configure time-domain resources for the first receiver to monitor the first signal 11 as symbol 4.

In some embodiments, in a case where the wake-up signal configuration and the first signal configuration are mutually independent, the time-domain position(s) corresponding to the WUS(s) and the time-domain position(s) corresponding to the first signal(s) overlap, or partially overlap, or do not overlap.

In some embodiments, in a case where the time-domain position(s) corresponding to the WUS(s) and the time-domain position(s) corresponding to the first signal(s) overlap or partially overlap, the terminal device needs to determine, based on its own terminal capability, whether it can receive the WUS(s) and the first signal(s) at the overlapping/same time-domain positions.

In some embodiments, in a case where the terminal device has scheduling constraints, the WUS(s) and the first signal(s) are received at different time-domain positions. In a case where the terminal device has scheduling constraints, the time-domain position for monitoring the WUS(s) corresponding to the wake-up signal configuration and the time-domain position for monitoring the first signal(s) corresponding to the first signal configuration are different time-domain positions.

Exemplarily, as shown in (c) of FIG. 11, in a case where the terminal device has scheduling constraints, a WUS 10 is received at symbol 1 and symbol 7, and a first signal 11 is received at symbol 4. The time-domain positions for receiving the wake-up signal 10 and the first signal 11 are different or non-overlapping.

Optionally, the terminal device having scheduling constraints includes at least one of the following:
the terminal device does not support simultaneous reception of the WUS(s) and the first signal(s);
the terminal device does not support simultaneous reception of inter-frequency carrier aggregation; or
the terminal device does not expect simultaneous reception of the WUS(s) and the first signal(s).

In some embodiments, in a case where the terminal device does not support simultaneous reception of the WUS(s) and the first signal(s), the WUS(s) and the first signal(s) are received at different time-domain positions.

In some embodiments, in a case where the terminal device does not support simultaneous reception of inter-frequency carrier aggregation, the WUS(s) and the first signal(s) are received at different time-domain positions.

In some embodiments, in a case where the terminal device does not expect simultaneous reception of the WUS(s) and the first signal(s), the WUS(s) and the first signal(s) are received at different time-domain positions.

In some embodiments, the distance between different time-domain positions is greater than or equal to a minimum switching duration for the terminal device to switch between different receiving frequency bands. For example, assuming that the minimum switching duration for the terminal device to switch between different receiving frequency bands corresponds to a duration of 2 symbols, the distance between different time-domain positions is greater than or equal to the duration of 2 symbols. Exemplarily, as shown in (c) of FIG. 11, reception of the first signal 11 is not supported or expected at the symbol where the wake-up signal 10 is received and within 2 symbols before and after reception of the wake-up signal 10; reception of the wake-up signal 10 is not supported or expected at the symbol where the first signal 11 is received and within 2 symbols before and after reception of the first signal 11.

In some embodiments, in a case where the terminal device has no scheduling constraints, the WUS(s) and the first signal(s) are received at the same, overlapping or partially overlapping time-domain positions. In a case where the terminal device has no scheduling constraints, the time-domain position for monitoring the WUS(s) corresponding to the wake-up signal configuration and the time-domain position for monitoring the first signal(s) corresponding to the first signal configuration are the same, overlapping or partially overlapping time-domain positions.

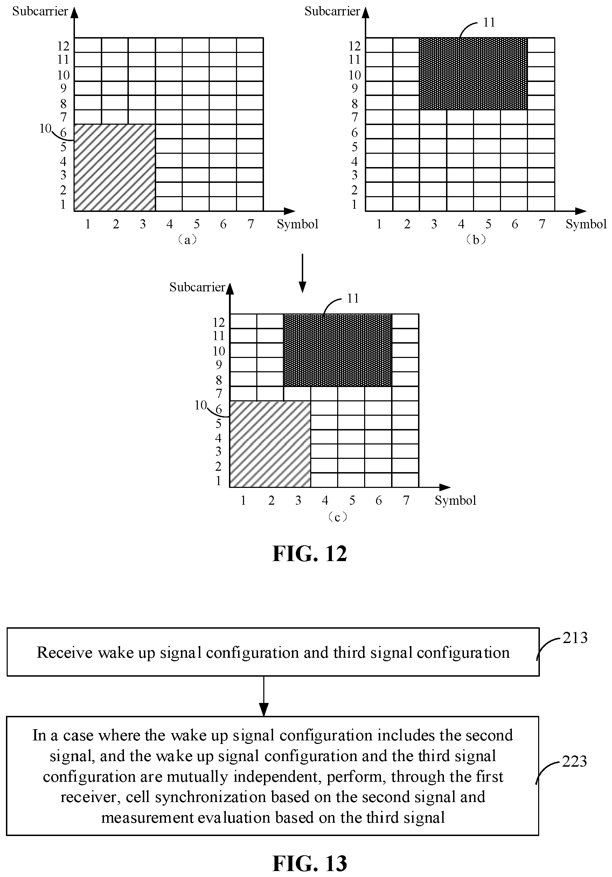

Exemplarily, as shown in (a) of FIG. 12, the wake-up signal configuration is arranged to configure time-domain resources for the first receiver to monitor the wake-up signal 10 as symbol 1 to symbol 3. As shown in (b) of FIG. 12, the first signal configuration is arranged to configure time-domain resources for the first receiver to monitor the first signal 11 as symbol 3 to symbol 6. In a case where the terminal device has no scheduling constraints, as shown in (c) of FIG. 12, the wake-up signal 10 and the first signal 11 can be received at the same symbol 3. Or in other words, the wake-up signal 10 and the first signal 11 are repeatedly monitored/received at the time-domain position corresponding to symbol 3.

Optionally, the terminal device having no scheduling constraints includes at least one of the following:
the terminal device supports simultaneous reception of the WUS(s) and the first signal(s);
the terminal device supports simultaneous reception of inter-frequency carrier aggregation; or
the terminal device has a first capability, where the first capability is arranged to indicate simultaneous reception of the WUS(s) and the first signal(s).

In some embodiments, in a case where the terminal device supports simultaneous reception of the WUS(s) and the first signal(s), the WUS(s) and the first signal(s) are received at the same, overlapping or partially overlapping time-domain positions.

In some embodiments, in a case where the terminal device supports simultaneous reception of inter-frequency carrier aggregation, the WUS(s) and the first signal(s) are received at the same, overlapping or partially overlapping time-domain positions.

In some embodiments, in a case where the terminal device has the first capability, the WUS(s) and the first signal(s) are received at the same, overlapping or partially overlapping time-domain positions. The first capability refers to a capability of the terminal device to support simultaneous reception of the WUS(s) and the first signal(s).

In some embodiments, the terminal device monitors the WUS(s) in units of wake-up signal (WUS) monitoring occasions, or in other words, the terminal device monitors the WUS(s) in units of WUS burst monitoring occasions. In some embodiments, the terminal device monitors the WUS(s) in units of WUS burst set monitoring occasions, where each WUS burst set includes at least one WUS burst. The WUS burst may refer to an SSB burst. In some embodiments, the WUS(s) is(are) periodic. In some embodiments, the WUS(s) is(are) aperiodic.

In some embodiments, the terminal device monitors the first signal(s) in units of first signal monitoring occasions, or in other words, the terminal device monitors the first signal(s) in units of first signal burst monitoring occasions. In some embodiments, the terminal device monitors the first signal(s) in units of first signal burst set monitoring occasions, where each first signal burst set includes at least one first signal burst. The first signal burst may refer to an SSB burst. In some embodiments, the first signal(s) is(are) periodic. In some embodiments, the first signal(s) is(are) aperiodic.

In some embodiments, the wake-up signal configuration is arranged to configure time-frequency resources for an aperiodic wake-up signal, and the first signal configuration is arranged to configure time-frequency resources for an aperiodic first signal.

In some embodiments, the wake-up signal configuration is arranged to configure time-frequency resources for an aperiodic wake-up signal, and the first signal configuration is arranged to configure time-frequency resources for a periodic first signal.

In some embodiments, the wake-up signal configuration is arranged to configure time-frequency resources for a periodic wake-up signal, and the first signal configuration is arranged to configure time-frequency resources for a periodic first signal.

In some embodiments, the wake-up signal configuration is arranged to configure time-frequency resources for a periodic wake-up signal, and the first signal configuration is arranged to configure time-frequency resources for an aperiodic first signal.

In some embodiments, the above operation 220 may also be replaced with the following sub-operation:
At operation 222, in a case where the wake-up signal configuration and the first signal configuration are mutually independent, cell synchronization and measurement evaluation are performed through the first receiver based on the first signal(s).

In some embodiments, the first signal(s) is arranged to perform cell synchronization and measurement evaluation.

Optionally, the signal arranged to perform cell synchronization and the signal arranged to perform measurement evaluation are two types of signals. For example, the signal arranged to perform cell synchronization is a first sub-signal in the first signal(s), and the signal arranged to perform measurement evaluation is a second sub-signal in the first signal(s). Different sub-signals are arranged to implement different functions.

Optionally, the signal arranged to perform cell synchronization and the signal arranged to perform measurement evaluation are the same type of signal(s). For example, an LP-SS is arranged to perform both cell synchronization and performing measurement evaluation. That is, one type of signal(s) can implement multiple functions.

In some embodiments, the first signal(s) is(are) signal(s) having a first waveform, or the first signal(s) is(are) signal(s) having a second waveform. The first waveform is obtained based on multi-carrier modulation, and the second waveform is obtained based on single-carrier modulation. Single-carrier refers to a modulation technique using only one carrier within a fixed frequency band, such as 2-ASK. Multi-carrier refers to a modulation technique using multiple carriers within a fixed frequency band, such as Orthogonal Frequency Division Multiplexing (OFDM).

In some embodiments, the first signal(s) is obtained based on multi-carrier modulation, or the first signal(s) is obtained based on single-carrier modulation. The single-carrier modulation manner includes at least one of single-carrier amplitude modulation, single-carrier frequency modulation, or single-carrier phase modulation.

Optionally, the first signal(s) is(are) signal(s) of the first waveform modulated based on multi-carrier modulation, such as an SSB.

Optionally, the first signal(s) is(are) signal(s) of the second waveform modulated based on single-carrier modulation, such as an LP-SS.

In some embodiments, in a case where the wake-up signal configuration and the first signal configuration are mutually independent, the RRM measurement time for the terminal device to perform RRM measurement includes the time for the first receiver to perform RRM measurement based on the first signal(s). Optionally, in a case where no measurement gap is required, the RRM measurement time includes the time for the first receiver to perform RRM measurement according to the period of the first signal(s). Optionally, in a case where a measurement gap is required, the RRM measurement time includes the time for the first receiver to perform RRM measurement according to the period of the measurement gap, where the measurement gap overlaps with a time-domain position of at least one first signal.

In summary, in the method according to this embodiment, by separately receiving the wake-up signal configuration and the first signal configuration, the terminal device can perform RRM measurement through the first receiver based on the first signal configuration. Moreover, based on the first signal configuration, it can determine that cell synchronization is performed based on the first signal(s) and measurement evaluation is performed based on the first signal(s).

In the embodiment of the present disclosure, through two mutually independent signal configurations, different signal configurations are arranged to configure signals to implement different functions, so that the terminal device can complete independent tasks based on independent signals, for example, implement a wake-up function based on WUS(s) configured by the wake-up signal configuration, and perform RRM measurement based on first signal(s) configured by the first signal configuration, thereby avoiding confusion between different signals. In addition, the mutually independent wake-up signal configuration and first signal configuration can also enable more flexible allocation of configuration resources. For example, in a case where the wake-up signal configuration is performed for each terminal device, the first signal configuration independent of the wake-up signal configuration may be for at least two terminal devices or at least one terminal device group, thereby enabling the first receiver of the terminal device to complete different tasks based on flexible signal configurations.

For configuration manner 3:
In a further embodiment based on the embodiment shown in FIG. 5 above, FIG. 13 is a flowchart of a method for RRM management according to an exemplary embodiment of the present disclosure. The above operation 210 may also be replaced with the following sub-operations.

At operation 213, wake-up signal configuration and third signal configuration are received.

In some embodiments, the wake-up signal configuration is arranged to configure time-frequency resources for the first receiver to monitor WUS(s). In some embodiments, the wake-up signal configuration includes second signal(s). Or in other words, the wake-up signal configuration is arranged to configure time-frequency resources for the first receiver to monitor the second signal(s), where the time-frequency resources for monitoring the second signal(s) are at least one time-frequency resource among the time-frequency resources for monitoring the wake-up signal. The first receiver monitors the second signal(s) on the at least one time-frequency resource for monitoring the wake-up signal.

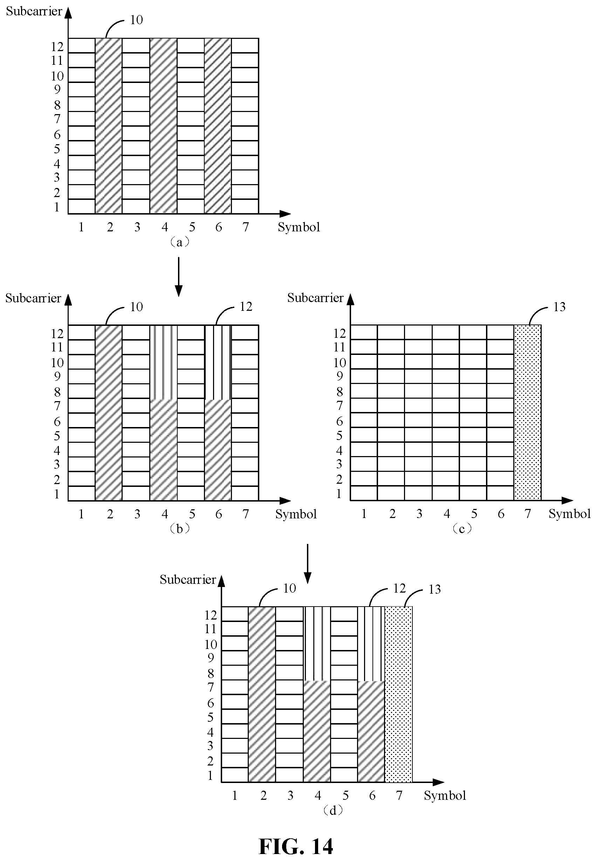

Exemplarily, as shown in (a) of FIG. 14, the wake-up signal configuration is arranged to configure time-domain resources for the first receiver to monitor the wake-up signal 10 as symbol 2, symbol 4 and symbol 6. As shown in (b) of FIG. 14, the wake-up signal configuration further configures time-domain resources for the first receiver to monitor the second signal 12 as symbol 4 and symbol 6.

In some embodiments, the second signal(s) is(are) arranged to perform cell synchronization. Optionally, the second signal(s) is(are) Tracking Reference Signal(s) (TRS(s)). It should be understood that the second signal(s) herein is(are) signal(s) only arranged to perform cell synchronization, or may be understood as sub-signal(s) arranged to perform cell synchronization in the first signal(s) above. In some embodiments, the TRS is an aperiodic signal arranged to perform cell synchronization. Optionally, the second signal(s) is(are) an Aperiodic TRS (A-TRS).

In some embodiments, the second signal(s) is(are) signal(s) having a first waveform, or the second signal(s) is(are) signal(s) having a second waveform. The first waveform is obtained based on multi-carrier modulation, and the second waveform is obtained based on single-carrier modulation. Single-carrier refers to a modulation technique using only one carrier within a fixed frequency band, such as 2-ASK. Multi-carrier refers to a modulation technique using multiple carriers within a fixed frequency band, such as OFDM.

In some embodiments, the second signal(s) is(are) obtained based on multi-carrier modulation, or the second signal(s) is(are) obtained based on single-carrier modulation. The single-carrier modulation manner includes at least one of single-carrier amplitude modulation, single-carrier frequency modulation, and single-carrier phase modulation.

Optionally, the second signal(s) is(are) signal(s) of the first waveform modulated based on multi-carrier modulation, such as a TRS.

Optionally, the second signal(s) is(are) signal(s) of the second waveform modulated based on single-carrier modulation, such as an LP-TRS.

In some embodiments, the third signal configuration is arranged to configure time-frequency resources for the first receiver to monitor third signal(s). The wake-up signal configuration and the third signal configuration are two mutually independent signal configurations. Exemplarily, as shown in (c) of FIG. 14, the third signal configuration is arranged to configure time-domain resources for the first receiver to monitor the third signal 13 as symbol 7.

In some embodiments, the third signal(s) is(are) arranged to perform measurement evaluation. Optionally, the third signal(s) is(are) Channel State Information - Reference Signal(s) (CSI-RS(s)). It should be understood that the third signal(s) herein may also be signal(s) arranged to perform cell synchronization and measurement evaluation. Or in other words, the third signal(s) is(are) the first signal(s) above, or sub-signal(s) arranged to perform measurement evaluation in the first signal(s) above.

In some embodiments, the third signal(s) is(are) signal(s) having a first waveform, or the third signal(s) is(are) signal(s) having a second waveform. The first waveform is obtained based on multi-carrier modulation, and the second waveform is obtained based on single-carrier modulation. Single-carrier refers to a modulation technique using only one carrier within a fixed frequency band, such as 2-ASK. Multi-carrier refers to a modulation technique using multiple carriers within a fixed frequency band, such as OFDM.

In some embodiments, the third signal(s) is(are) obtained based on multi-carrier modulation, or the third signal(s) is(are) obtained based on single-carrier modulation. The single-carrier modulation manner includes at least one of single-carrier amplitude modulation, single-carrier frequency modulation, or single-carrier phase modulation.

Optionally, the third signal(s) is(are) signal(s) of the first waveform modulated based on multi-carrier modulation, such as a CSI-RS.

Optionally, the third signal(s) is(are) signal(s) of the second waveform modulated based on single-carrier modulation, such as an LP-CSI-RS.

In some embodiments, in a case where the wake-up signal configuration and the third signal configuration are mutually independent, the time-domain position(s) corresponding to the WUS(s) and the time-domain position(s) corresponding to the third signal(s) overlap, or partially overlap, or do not overlap.

In some embodiments, in a case where the time-domain position(s) corresponding to the WUS(s) and the time-domain position(s) corresponding to the third signal(s) overlap or partially overlap, the terminal device needs to determine, based on its own terminal capability, whether the terminal device can receive the WUS(s) and the third signal(s) at the overlapping/same time-domain positions.

In some embodiments, in a case where the terminal device has scheduling constraints, the WUS(s) and the third signal(s) are received at different time-domain positions. In a case where the terminal device has scheduling constraints, the time-domain position for monitoring the WUS(s) corresponding to the wake-up signal configuration and the time-domain position for monitoring the third signal(s) corresponding to the third signal configuration are different time-domain positions. At least one time-domain position for monitoring the WUS(s) is also used for monitoring the second signal(s). Exemplarily, as shown in (d) of FIG. 14, the wake-up signal 10 and the third signal 13 are monitored at different time-domain positions, and at least one symbol for monitoring the wake-up signal 10 is also used for monitoring the second signal 12.

Optionally, the terminal device having scheduling constraints includes at least one of the following:
the terminal device does not support simultaneous reception of the WUS(s) and the third signal(s);
the terminal device does not support simultaneous reception of inter-frequency carrier aggregation; or
the terminal device does not expect simultaneous reception of the WUS(s) and the third signal(s).

In some embodiments, in a case where the terminal device does not support simultaneous reception of the WUS(s) and the third signal(s), the WUS(s) and the third signal(s) are received at different time-domain positions.

In some embodiments, in a case where the terminal device does not support simultaneous reception of inter-frequency carrier aggregation, the WUS(s) and the third signal(s) are received at different time-domain positions.

In some embodiments, in a case where the terminal device does not expect simultaneous reception of the WUS(s) and the third signal(s), the WUS(s) and the third signal(s) are received at different time-domain positions.

In some embodiments, the distance between different time-domain positions is greater than or equal to a minimum switching duration for the terminal device to switch between different receiving frequency bands. For example, assuming that the minimum switching duration for the terminal device to switch between different receiving frequency bands corresponds to a duration of 2 symbols, the distance between different time-domain positions is greater than or equal to the duration of 2 symbols.

In some embodiments, in a case where the terminal device has no scheduling constraints, the WUS(s) and the third signal(s) are received at the same, overlapping or partially overlapping time-domain positions. In a case where the terminal device has no scheduling constraints, the time-domain position for monitoring the WUS(s) corresponding to the wake-up signal configuration and the time-domain position for monitoring the third signal(s) corresponding to the third signal configuration are the same, overlapping or partially overlapping time-domain positions.

Optionally, the terminal device having no scheduling constraints includes at least one of the following:
the terminal device supports simultaneous reception of the WUS(s) and the third signal(s);
the terminal device supports simultaneous reception of inter-frequency carrier aggregation; or
the terminal device has a second capability, where the second capability is arranged to indicate simultaneous reception of the WUS(s) and the third signal(s).

In some embodiments, in a case where the terminal device supports simultaneous reception of the WUS(s) and the third signal(s), the WUS(s) and the third signal(s) are received at the same, overlapping or partially overlapping time-domain positions.

In some embodiments, in a case where the terminal device supports simultaneous reception of inter-frequency carrier aggregation, the WUS(s) and the third signal(s) are received at the same, overlapping or partially overlapping time-domain positions.

In some embodiments, in a case where the terminal device has the second capability, the WUS(s) and the third signal(s) are received at the same, overlapping or partially overlapping time-domain positions. The second capability refers to a capability of the terminal device to support simultaneous reception of the WUS(s) and the third signal(s).

In some embodiments, the terminal device monitors the WUS(s) in units of wake-up signal (WUS) monitoring occasions, or in other words, the terminal device monitors the WUS(s) in units of WUS burst monitoring occasions. In some embodiments, the terminal device monitors the WUS(s) in units of WUS burst set monitoring occasions, where each WUS burst set includes at least one WUS burst. The WUS burst may refer to an SSB burst. In some embodiments, the WUS(s) is(are) periodic. In some embodiments, the WUS(s) is(are) aperiodic.

In some embodiments, the terminal device monitors the third signal(s) in units of third signal monitoring occasions, or in other words, the terminal device monitors the third signal(s) in units of third signal burst monitoring occasions. In some embodiments, the terminal device monitors the third signal(s) in units of third signal burst set monitoring occasions, where each third signal burst set includes at least one third signal burst. The third signal burst may refer to an SSB burst. In some embodiments, the third signal(s) is(are) periodic. In some embodiments, the third signal(s) is(are) aperiodic.

In some embodiments, the wake-up signal configuration is arranged to configure time-frequency resources for aperiodic WUS burst(s), each or at least one WUS burst includes at least one second signal, and the third signal configuration is arranged to configure time-frequency resources for an aperiodic third signal. The at least one second signal is periodic, or the at least one second signal is aperiodic.

In some embodiments, the wake-up signal configuration is arranged to configure time-frequency resources for aperiodic WUS burst(s), each or at least one WUS burst includes at least one second signal, and the third signal configuration is arranged to configure time-frequency resources for a periodic third signal. The at least one second signal is periodic, or the at least one second signal is aperiodic.

In some embodiments, the wake-up signal configuration is arranged to configure time-frequency resources for periodic WUS burst(s), each or at least one WUS burst includes at least one second signal, and the third signal configuration is arranged to configure time-frequency resources for a periodic third signal. The at least one second signal is periodic, or the at least one second signal is aperiodic.

In some embodiments, the wake-up signal configuration is arranged to configure time-frequency resources for periodic WUS burst(s), each or at least one WUS burst includes at least one second signal, and the third signal configuration is arranged to configure time-frequency resources for an aperiodic third signal. The at least one second signal is periodic, or the at least one second signal is aperiodic.

In some embodiments, the above operation 220 may also be replaced with the following sub-operation.

At operation 223, in a case where the wake-up signal configuration includes second signal(s), and the wake-up signal configuration and the third signal configuration are mutually independent, cell synchronization is performed through the first receiver based on the second signal(s) and measurement evaluation is performed through the first receiver based on the third signal(s).

In some embodiments, in a case where the wake-up signal configuration and the third signal configuration are mutually independent, cell synchronization is performed based on the second signal(s) in the wake-up signal configuration, and measurement evaluation is performed based on the third signal(s) in the third signal configuration. For example, cell synchronization is performed through the first receiver based on second signals within x wake-up periods and measurement evaluation is performed through the first receiver based on y third signals. The wake-up period is a period of the wake-up signal, x is a positive integer, and y is a positive integer.

In some embodiments, the value of x is determined based on the number of second signals within each wake-up period. For example, in a case where at least 2 second signals are required to complete cell synchronization, assuming the number of second signals within each wake-up period is greater than or equal to 2, x = 1; assuming the number of second signals within each wake-up period is 1, x = 2.

In some embodiments, the RRM measurement time for the terminal device to perform RRM measurement includes the time for performing cell synchronization using second signals within x wake-up periods and the time for performing measurement evaluation using y third signals. In some embodiments, since the second signal(s) and the third signal(s) are received based on two different signal configurations respectively, the second signal(s) and the third signal(s) may be discontinuous. Or in other words, the second signal(s) arranged to perform cell synchronization and the third signal(s) arranged to perform measurement evaluation are discontinuous. For example, after cell synchronization is performed based on the second signal(s), measurement evaluation is performed based on the third signal(s) after an interval of n time-domain units. In this case, the RRM measurement time includes the time for performing cell synchronization using the second signal(s), the interval time between the second signal(s) and the third signal(s), and the time for performing measurement evaluation using the third signal(s).

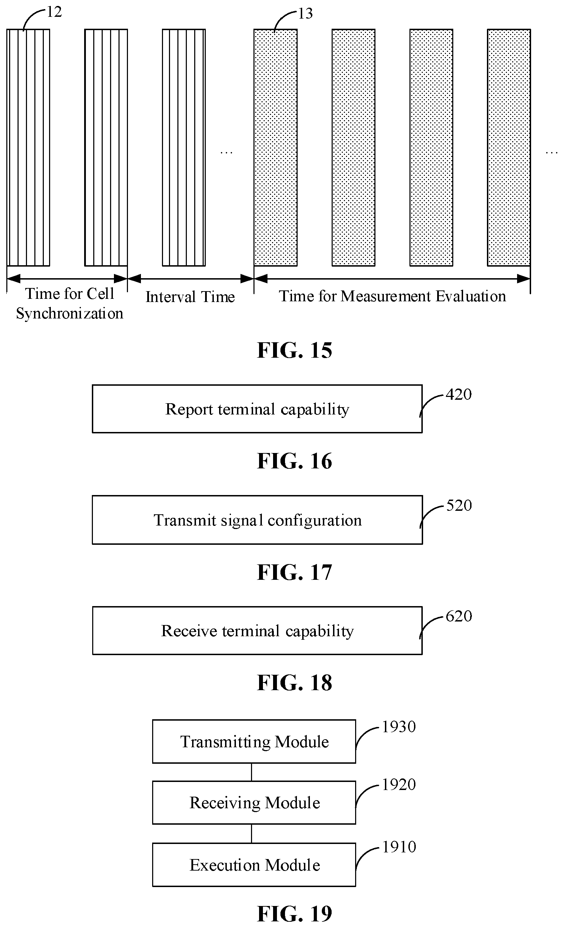

Exemplarily, as shown in FIG. 15, assuming that cell synchronization is performed through the first receiver based on 2 second signals and measurement evaluation is performed through the first receiver based on 4 third signals. The 2 second signals arranged to perform cell synchronization and the 4 third signals arranged to perform measurement evaluation are discontinuous signals. That is, after cell synchronization is completed, measurement evaluation starts after a period of time. The RRM measurement time includes the time for performing cell synchronization using 2 second signals, the interval time between the second signal(s) and the third signal(s), and the time for performing measurement evaluation using 4 third signals.

In some embodiments, in a case where no measurement gap is required, measurement evaluation is performed according to the period of the third signal(s). In some embodiments, in a case where a measurement gap is required, measurement evaluation is performed according to the period of the measurement gap, where the measurement gap overlaps with a time-domain position of at least one third signal.

In summary, in the method according to this embodiment, by separately receiving the wake-up signal configuration and the third signal configuration, the terminal device can determine, based on the wake-up signal configuration, that cell synchronization is performed based on the second signal(s), and determine, based on the third signal configuration, that measurement evaluation is performed based on the third signal(s).

In the embodiment of the present disclosure, one wake-up signal configuration further enables to monitoring of the second signal(s) simultaneously on at least one time-frequency resource for monitoring WUS(s), and the terminal device can monitor the second signal(s) while monitoring the wake-up signal, so that the terminal device can allocate power consumption more efficiently, thereby further reducing power consumption.

For configuration manner 4:
In a further embodiment based on the embodiment shown in FIG. 5 above,
The above operation 210 may also be replaced with the following sub-operations.

At operation 214, wake-up signal configuration, second signal configuration and third signal configuration are received.

In some embodiments, the wake-up signal configuration is arranged to configure time-frequency resources for the first receiver to monitor WUS(s). The second signal configuration is arranged to configure time-frequency resources for the first receiver to monitor second signal(s). The third signal configuration is arranged to configure time-frequency resources for the first receiver to monitor third signal(s). The wake-up signal configuration, the second signal configuration and the third signal configuration are three mutually independent signal configurations.

In some embodiments, the second signal(s) is(are) arranged to perform cell synchronization. Optionally, the second signal(s) is(are) a TRS. It should be understood that the second signal(s) herein is(are) signal(s) only arranged to perform cell synchronization, or may be understood as a sub-signal arranged to perform cell synchronization in the first signal(s) above. In some embodiments, the TRS is an aperiodic signal arranged to perform cell synchronization. Optionally, the second signal(s) is(are) an A-TRS.

In some embodiments, the second signal(s) is(are) signal(s) having a first waveform, or the second signal(s) is(are) signal(s) having a second waveform. The first waveform is obtained based on multi-carrier modulation, and the second waveform is obtained based on single-carrier modulation. Single-carrier refers to a modulation technique using only one carrier within a fixed frequency band, such as 2-ASK. Multi-carrier refers to a modulation technique using multiple carriers within a fixed frequency band, such as OFDM.

In some embodiments, the second signal(s) is(are) obtained based on multi-carrier modulation, or the second signal(s) is(are) obtained based on single-carrier modulation. The single-carrier modulation manner includes at least one of single-carrier amplitude modulation, single-carrier frequency modulation, or single-carrier phase modulation.

Optionally, the second signal(s) is(are) signal(s) of the first waveform modulated based on multi-carrier modulation, such as a TRS.

Optionally, the second signal(s) is(are) signal(s) of the second waveform modulated based on single-carrier modulation, such as an LP-TRS.

In some embodiments, the third signal(s) is(are) arranged to perform measurement evaluation. Optionally, the third signal(s) is(are) a CSI-RS. It should be understood that the third signal(s) herein may also be a signal arranged to perform cell synchronization and measurement evaluation. Or in other words, the third signal(s) is(are) the first signal(s) above, or a sub-signal arranged to perform measurement evaluation in the first signal(s) above.

In some embodiments, the third signal(s) is(are) signal(s) having a first waveform, or the third signal(s) is(are) signal(s) having a second waveform. The first waveform is obtained based on multi-carrier modulation, and the second waveform is obtained based on single-carrier modulation. Single-carrier refers to a modulation technique using only one carrier within a fixed frequency band, such as 2-ASK. Multi-carrier refers to a modulation technique using multiple carriers within a fixed frequency band, such as OFDM.

In some embodiments, the third signal(s) is(are) obtained based on multi-carrier modulation, or the third signal(s) is(are) obtained based on single-carrier modulation. The single-carrier modulation manner includes at least one of single-carrier amplitude modulation, single-carrier frequency modulation, or single-carrier phase modulation.

Optionally, the third signal(s) is(are) signal(s) of the first waveform modulated based on multi-carrier modulation, such as a CSI-RS.

Optionally, the third signal(s) is(are) signal(s) of the second waveform modulated based on single-carrier modulation, such as an LP-CSI-RS.

In some embodiments, in a case where the wake-up signal configuration, the second signal configuration and the third signal configuration are mutually independent, at least two of the following overlap, or partially overlap, or do not overlap: the time-domain position(s) corresponding to the wake-up signal(s), the time-domain position(s) corresponding to the second signal(s), and the time-domain position(s) corresponding to the third signal(s).

In some embodiments, in a case where at least two of the following overlap, or partially overlap: the time-domain position(s) corresponding to the WUR(s)wake-up signal, the time-domain position(s) corresponding to the second signal(s), and the time-domain position(s) corresponding to the third signal(s), the terminal device needs to determine, based on its own terminal capability, whether the terminal device can receive at least two types of signals at the overlapping/same time-domain positions.

In some embodiments, in a case where the terminal device has scheduling constraints, the at least two types of signals are received at different time-domain positions.

Optionally, the terminal device having scheduling constraints includes at least one of the following:
the terminal device does not support simultaneous reception of at least two types of signals;
the terminal device does not support simultaneous reception of inter-frequency carrier aggregation; or
the terminal device does not expect simultaneous reception of at least two types of signals.

In some embodiments, in a case where the terminal device does not support simultaneous reception of at least two types of signals, the at least two types of signals are received at different time-domain positions.

In some embodiments, in a case where the terminal device does not support simultaneous reception of inter-frequency carrier aggregation, the at least two types of signals are received at different time-domain positions.

In some embodiments, in a case where the terminal device does not expect simultaneous reception of at least two types of signals, the at least two types of signals are received at different time-domain positions.

In some embodiments, the distance between different time-domain positions is greater than or equal to a minimum switching duration for the terminal device to switch between different receiving frequency bands.

In some embodiments, in a case where the terminal device has no scheduling constraints, the at least two types of signals are received at the same, overlapping or partially overlapping time-domain positions.

Optionally, the terminal device having no scheduling constraints includes at least one of the following:
the terminal device supports simultaneous reception of at least two types of signals;
the terminal device supports simultaneous reception of inter-frequency carrier aggregation; or
the terminal device has a third capability, where the third capability is arranged to indicate simultaneous reception of at least two types of signals.

In some embodiments, in a case where the terminal device supports simultaneous reception of at least two types of signals, the at least two types of signals are received at the same, overlapping or partially overlapping time-domain positions.

In some embodiments, in a case where the terminal device supports simultaneous reception of inter-frequency carrier aggregation, the WUS(s) and the third signal(s) are received at the same, overlapping or partially overlapping time-domain positions.

In some embodiments, in a case where the terminal device has the third capability, the at least two types of signals are received at the same, overlapping or partially overlapping time-domain positions. The third capability refers to a capability of the terminal device to support simultaneous reception of at least two types of signals.

In some embodiments, the terminal device monitors the WUS(s) in units of WUS monitoring occasions, or in other words, the terminal device monitors the WUS(s) in units of WUS burst monitoring occasions. In some embodiments, the terminal device monitors the WUS(s) in units of WUS burst set monitoring occasions, where each WUS burst set includes at least one WUS burst. The WUS burst may refer to an SSB burst. In some embodiments, the WUS(s) is(are) periodic. In some embodiments, the WUS(s) is(are) aperiodic.

In some embodiments, the terminal device monitors the second signal(s) in units of second signal monitoring occasions, or in other words, the terminal device monitors the second signal(s) in units of second signal burst monitoring occasions. In some embodiments, the terminal device monitors the second signal(s) in units of second signal burst set monitoring occasions, where each second signal burst set includes at least one second signal burst. The second signal burst may refer to an SSB burst. In some embodiments, the second signal(s) is(are) periodic. In some embodiments, the second signal(s) is(are) aperiodic.

In some embodiments, the terminal device monitors the third signal(s) in units of third signal monitoring occasions, or in other words, the terminal device monitors the third signal(s) in units of third signal burst monitoring occasions. In some embodiments, the terminal device monitors the third signal(s) in units of third signal burst set monitoring occasions, where each third signal burst set includes at least one third signal burst. The third signal burst may refer to an SSB burst. In some embodiments, the third signal(s) is(are) periodic. In some embodiments, the third signal(s) is(are) aperiodic.

In some embodiments, the above operation 220 may also be replaced with the following sub-operation.

At operation 224, in a case where the wake-up signal configuration, the second signal configuration and the third signal configuration are mutually independent, cell synchronization is performed through the first receiver based on the second signal(s) and measurement evaluation is performed through the first receiver based on the third signal(s).

In some embodiments, the wake-up signal configuration is arranged to configure time-frequency resources for an aperiodic wake-up signal, the second signal configuration is arranged to configure time-frequency resources for an aperiodic second signal, and the third signal configuration is arranged to configure time-frequency resources for an aperiodic third signal.

In some embodiments, the wake-up signal configuration is arranged to configure time-frequency resources for an aperiodic wake-up signal, the second signal configuration is arranged to configure time-frequency resources for an aperiodic second signal, and the third signal configuration is arranged to configure time-frequency resources for a periodic third signal.

In some embodiments, the wake-up signal configuration is arranged to configure time-frequency resources for an aperiodic wake-up signal, the second signal configuration is arranged to configure time-frequency resources for a periodic second signal, and the third signal configuration is arranged to configure time-frequency resources for an aperiodic third signal.

In some embodiments, the wake-up signal configuration is arranged to configure time-frequency resources for an aperiodic wake-up signal, the second signal configuration is arranged to configure time-frequency resources for a periodic second signal, and the third signal configuration is arranged to configure time-frequency resources for a periodic third signal.

In some embodiments, the wake-up signal configuration is arranged to configure time-frequency resources for a periodic wake-up signal, the second signal configuration is arranged to configure time-frequency resources for an aperiodic second signal, and the third signal configuration is arranged to configure time-frequency resources for an aperiodic third signal.

In some embodiments, the wake-up signal configuration is arranged to configure time-frequency resources for a periodic wake-up signal, the second signal configuration is arranged to configure time-frequency resources for an aperiodic second signal, and the third signal configuration is arranged to configure time-frequency resources for a periodic third signal.

In some embodiments, the wake-up signal configuration is arranged to configure time-frequency resources for a periodic wake-up signal, the second signal configuration is arranged to configure time-frequency resources for a periodic second signal, and the third signal configuration is arranged to configure time-frequency resources for an aperiodic third signal.

In some embodiments, the wake-up signal configuration is arranged to configure time-frequency resources for a periodic wake-up signal, the second signal configuration is arranged to configure time-frequency resources for a periodic second signal, and the third signal configuration is arranged to configure time-frequency resources for a periodic third signal.

FIG. 16 is a flowchart of a method for RRM management according to an exemplary embodiment of the present disclosure. The method is performed by a terminal device. The method includes the fllowing operations.

At operation 420, a terminal capability is reported.

In some embodiments, the terminal capability is arranged to indicate whether the terminal device supports performing cell synchronization using a signal in WUS configuration. In the embodiment of the present disclosure, the term "report" may be understood as "send".

Optionally, the terminal capability includes a first terminal capability, where the first terminal capability is arranged to indicate that the terminal device supports performing cell synchronization using a signal in WUS configuration.

Optionally, the terminal capability includes a second terminal capability, where the second terminal capability is arranged to indicate that the terminal device does not support performing cell synchronization using a signal in WUS configuration, or is arranged to indicate that the terminal device supports performing cell synchronization using first signal(s) determined by first signal configuration mutually independent of the wake-up signal configuration.

Optionally, the terminal capability includes a third terminal capability, where the third terminal capability is arranged to indicate that the terminal device supports performing cell synchronization using a signal in WUS configuration and supports performing cell synchronization using first signal(s) determined by first signal configuration mutually independent of the wake-up signal configuration. In some embodiments, the third terminal capability may also be understood as including both the first terminal capability and the second terminal capability.

In some embodiments, the signal(s) in the wake-up signal configuration includes first signal(s) or second signal(s).

Optionally, the wake-up signal configuration includes first signal(s). Or in other words, the wake-up signal configuration is arranged to configure time-frequency resources for the first receiver to monitor WUS(s), and is further used to configure the first receiver to monitor the first signal(s) on at least one time-frequency resource for monitoring the wake-up signal. For a specific implementation manner in which the wake-up signal configuration includes the first signal(s), refer to the above configuration manner 1.

Optionally, the wake-up signal configuration includes second signal(s). Or in other words, the wake-up signal configuration is further used to configure the first receiver to monitor the second signal(s) on at least one time-frequency resource for monitoring WUS(s). For a specific implementation manner in which the wake-up signal configuration includes the second signal(s), refer to the above configuration manner 3.

For a specific implementation manner of the first signal(s) determined by the first signal configuration mutually independent of the wake-up signal configuration, refer to the above configuration manner 2.

In some embodiments, in a case where the terminal device supports performing cell synchronization using a signal in WUS configuration and supports performing cell synchronization using first signal(s) determined by first signal configuration mutually independent of the wake-up signal configuration, RRM measurement time for the terminal device to perform RRM measurement is determined based on a measurement occasion. The measurement occasion is an occasion on which the terminal device performs RRM measurement.

In some embodiments, in a case where the third terminal capability is supported and RRM measurement is performed before receiving the wake-up signal configuration, the RRM measurement time includes time for performing cell synchronization based on the first signal(s) and time for performing measurement evaluation. It should be understood that when RRM measurement is performed before receiving the wake-up signal configuration, cell synchronization and measurement evaluation are performed using the first signal(s) determined by the first signal configuration mutually independent of the wake-up signal configuration.

In some embodiments, in a case where the third terminal capability is supported and RRM measurement is performed after receiving the wake-up signal configuration, the RRM measurement time includes time for performing cell synchronization based on a signal in the wake-up signal configuration and time for performing measurement evaluation. It should be understood that when RRM measurement is performed after receiving the wake-up signal configuration, cell synchronization is performed once using the signal(s) in the wake-up signal configuration, and then measurement evaluation is performed using the first signal(s) determined by the first signal configuration mutually independent of the wake-up signal configuration, or measurement evaluation is performed using the first signal(s) in the wake-up signal configuration if the wake-up signal configuration includes the first signal(s).

Optionally, the terminal capability includes a fourth terminal capability, where the fourth terminal capability is arranged to indicate whether the first receiver supports receiving signal(s) having a first waveform, where the first waveform is obtained based on multi-carrier modulation. Multi-carrier refers to a modulation technique using multiple carriers within a fixed frequency band, such as OFDM.

Optionally, the terminal capability includes a fifth terminal capability, where the fifth terminal capability is arranged to indicate whether the first receiver supports receiving signal(s) having a second waveform, where the second waveform is obtained based on single-carrier modulation. Single-carrier refers to a modulation technique using only one carrier within a fixed frequency band, such as 2-ASK. The single-carrier modulation manner includes at least one of single-carrier amplitude modulation, single-carrier frequency modulation, and single-carrier phase modulation.

It should be noted that the above operation 420 is generally performed before operation 210.

In summary, in the method according to this embodiment, by reporting the terminal capability, the terminal device can report, to a network device in advance, a capability of supporting how to perform RRM measurement, so that the terminal device can receive signal configuration from the network device and perform RRM measurement based on its own capability.

It should be noted that the above operation 420 may be implemented in combination with any one of operations 210 to 214 above as a new embodiment. The above operation 420 may also be implemented in combination with operations 210 and 220 above as a new embodiment. The above operation 420 may also be implemented in combination with operations 212 and 222 above as a new embodiment. The above operation 420 may also be implemented in combination with operations 213 and 223 above as a new embodiment. The above operation 420 may also be implemented in combination with operations 214 and 224 above as a new embodiment.

FIG. 17 is a flowchart of a method for RRM management according to an exemplary embodiment of the present disclosure. The method is performed by a network device. The method includes the following operations.

At operation 520, signal configuration is transmitted.

In some embodiments, the signal configuration is arranged to configure time-frequency resources for at least one type of signal(s). Optionally, the at least one type of signal(s) includes at least one of the following:
first signal(s);
second signal(s);
third signal(s); or
WUS(s).

In some embodiments, the first signal(s) is arranged to perform cell synchronization and measurement evaluation.

Optionally, the signal arranged to perform cell synchronization and the signal arranged to perform measurement evaluation are two types of signals. For example, the signal arranged to perform cell synchronization is a first sub-signal in the first signal(s), and the signal arranged to perform measurement evaluation is a second sub-signal in the first signal(s). Different sub-signals are arranged to implement different functions.

Optionally, the signal arranged to perform cell synchronization and the signal arranged to perform measurement evaluation are the same type of signal(s). For example, an LP-SS is arranged to perform both cell synchronization and measurement evaluation. That is, one type of signal(s) can implement multiple functions.

In some embodiments, the first signal(s) is(are) signal(s) having a first waveform, where the first waveform is obtained based on multi-carrier modulation. Multi-carrier refers to a modulation technique using multiple carriers within a fixed frequency band, such as Orthogonal Frequency Division Multiplexing (OFDM). Or the first signal(s) is(are) signal(s) having a second waveform, where the second waveform is obtained based on single-carrier modulation. Single-carrier refers to a modulation technique using only one carrier within a fixed frequency band, such as 2-ASK.

In some embodiments, the second signal(s) is(are) arranged to perform cell synchronization.

It should be understood that the second signal(s) herein is(are) signal(s) only arranged to perform cell synchronization, or may be understood as a sub-signal arranged to perform cell synchronization in the first signal(s) above.

In some embodiments, the second signal(s) is(are) signal(s) having a first waveform, where the first waveform is obtained based on multi-carrier modulation, such as OFDM. Or the second signal(s) is(are) signal(s) having a second waveform, where the second waveform is obtained based on single-carrier modulation, such as 2-ASK.

In some embodiments, the third signal(s) is(are) arranged to perform measurement evaluation.

It should be understood that the third signal(s) herein may also be a signal arranged to perform cell synchronization and measurement evaluation. Or in other words, the third signal(s) is(are) a sub-signal arranged to perform measurement evaluation in the first signal(s) above.

In some embodiments, the third signal(s) is(are) signal(s) having a first waveform, where the first waveform is obtained based on multi-carrier modulation, such as OFDM. Or the third signal(s) is(are) signal(s) having a second waveform, where the second waveform is obtained based on single-carrier modulation, such as 2-ASK.

In some embodiments, the WUS(s) is(are) signal(s) having a first waveform, where the first waveform is obtained based on multi-carrier modulation, such as OFDM. Or the WUS(s) is(are) signal(s) having a second waveform, where the second waveform is obtained based on single-carrier modulation, such as 2-ASK.

In some embodiments, the configuration manner of the above signal configuration includes one or more of the following:

Configuration manner 1: WUS configuration. The wake-up signal configuration is arranged to configure time-frequency resources for the first receiver to monitor WUS(s). The wake-up signal configuration includes first signal(s), where the first signal(s) is arranged to perform cell synchronization and measurement evaluation. Or in other words, the wake-up signal configuration is arranged to configure time-frequency resources for the first receiver to monitor the first signal(s), where the time-frequency resources for monitoring the first signal(s) are at least one time-frequency resource among the time-frequency resources for monitoring the wake-up signal. The first receiver monitors the first signal(s) on the at least one time-frequency resource for monitoring the wake-up signal.

Configuration manner 2: mutually independent wake-up signal configuration and first signal configuration. The wake-up signal configuration is arranged to configure time-frequency resources for the first receiver to monitor WUS(s). The first signal configuration is arranged to configure time-frequency resources for the first receiver to monitor first signal(s), where the first signal(s) is arranged to perform cell synchronization and measurement evaluation.

Configuration manner 3: mutually independent wake-up signal configuration and third signal configuration. The wake-up signal configuration is arranged to configure time-frequency resources for the first receiver to monitor WUS(s). The wake-up signal configuration includes second signal(s), where the second signal(s) is(are) arranged to perform cell synchronization. Or in other words, the wake-up signal configuration is arranged to configure time-frequency resources for the first receiver to monitor the second signal(s), where the time-frequency resources for monitoring the second signal(s) are at least one time-frequency resource among the time-frequency resources for monitoring the wake-up signal. The first receiver monitors the second signal(s) on the at least one time-frequency resource for monitoring the wake-up signal. The third signal configuration is arranged to configure time-frequency resources for the first receiver to monitor third signal(s), where the third signal(s) is(are) arranged to perform measurement evaluation.

Configuration manner 4: mutually independent wake-up signal configuration, second signal configuration and third signal configuration. The wake-up signal configuration is arranged to configure time-frequency resources for the first receiver to monitor WUS(s). The second signal configuration is arranged to configure time-frequency resources for the first receiver to monitor second signal(s), where the second signal(s) is(are) arranged to perform cell synchronization. The third signal configuration is arranged to configure time-frequency resources for the first receiver to monitor third signal(s), where the third signal(s) is(are) arranged to perform measurement evaluation.

In some embodiments, the above operation 520 may be replaced with the following sub-operations.

At operation 521, WUS configuration is transmitted.

In some embodiments, the wake-up signal configuration is arranged to configure time-frequency resources for the first receiver to monitor WUS(s). In some embodiments, the wake-up signal configuration includes first signal(s). Or in other words, the wake-up signal configuration is arranged to configure time-frequency resources for the first receiver to monitor the first signal(s), where the time-frequency resources for monitoring the first signal(s) are at least one time-frequency resource among the time-frequency resources for monitoring the wake-up signal. The first receiver monitors the first signal(s) on the at least one time-frequency resource for monitoring the wake-up signal.

In some embodiments, the wake-up signal configuration is arranged to configure time-frequency resources for bursts of the aperiodic wake-up signal, and each or at least one WUS burst includes at least one first signal. The at least one first signal is(are) periodic, or the at least one first signal is(are) aperiodic.

In some embodiments, the wake-up signal configuration is arranged to configure time-frequency resources for bursts of the periodic wake-up signal, and each or at least one WUS burst includes at least one first signal. The at least one first signal is(are) periodic, or the at least one first signal is(are) aperiodic.

For a specific implementation manner in which the wake-up signal configuration includes the first signal(s), refer to the above configuration manner 1.

In some embodiments, the above operation 520 may be replaced with the following sub-operations.

Operation 522: transmit WUS configuration and first signal configuration.

In some embodiments, the wake-up signal configuration and the first signal configuration are mutually independent. The wake-up signal configuration is arranged to configure time-frequency resources for the first receiver to monitor WUS(s), and the first signal configuration is arranged to configure time-frequency resources for the first receiver to monitor first signal(s), where the first signal(s) is arranged to perform cell synchronization and measurement evaluation.

In some embodiments, the wake-up signal configuration is arranged to configure time-frequency resources for an aperiodic wake-up signal, and the first signal configuration is arranged to configure time-frequency resources for an aperiodic first signal.

In some embodiments, the wake-up signal configuration is arranged to configure time-frequency resources for an aperiodic wake-up signal, and the first signal configuration is arranged to configure time-frequency resources for a periodic first signal.

In some embodiments, the wake-up signal configuration is arranged to configure time-frequency resources for a periodic wake-up signal, and the first signal configuration is arranged to configure time-frequency resources for a periodic first signal.

In some embodiments, the wake-up signal configuration is arranged to configure time-frequency resources for a periodic wake-up signal, and the first signal configuration is arranged to configure time-frequency resources for an aperiodic first signal.

For a specific implementation manner in which the wake-up signal configuration and the first signal configuration are mutually independent, refer to the above configuration manner 2.

In some embodiments, the above operation 520 may be replaced with the following sub-operations:
Operation 523: transmit WUS configuration and third signal configuration.

In some embodiments, the wake-up signal configuration is arranged to configure time-frequency resources for the first receiver to monitor WUS(s). In some embodiments, the wake-up signal configuration includes second signal(s). Or in other words, the wake-up signal configuration is arranged to configure time-frequency resources for the first receiver to monitor the second signal(s), where the time-frequency resources for monitoring the second signal(s) are at least one time-frequency resource among the time-frequency resources for monitoring the wake-up signal. The first receiver monitors the second signal(s) on the at least one time-frequency resource for monitoring the wake-up signal. In some embodiments, the third signal configuration is arranged to configure time-frequency resources for the first receiver to monitor third signal(s). The wake-up signal configuration and the third signal configuration are two mutually independent signal configurations.

In some embodiments, the wake-up signal configuration is arranged to configure time-frequency resources for aperiodic WUS burst(s), each or at least one WUS burst includes at least one second signal, and the third signal configuration is arranged to configure time-frequency resources for an aperiodic third signal.

In some embodiments, the wake-up signal configuration is arranged to configure time-frequency resources for aperiodic WUS burst(s), each or at least one WUS burst includes at least one second signal, and the third signal configuration is arranged to configure time-frequency resources for a periodic third signal.

In some embodiments, the wake-up signal configuration is arranged to configure time-frequency resources for periodic WUS burst(s), each or at least one WUS burst includes at least one second signal, and the third signal configuration is arranged to configure time-frequency resources for a periodic third signal.

In some embodiments, the wake-up signal configuration is arranged to configure time-frequency resources for periodic WUS burst(s), each or at least one WUS burst includes at least one second signal, and the third signal configuration is arranged to configure time-frequency resources for an aperiodic third signal.

For a specific implementation manner in which the wake-up signal configuration and the third signal configuration are mutually independent, refer to the above configuration manner 3.

In some embodiments, the above operation 520 may be replaced with the following sub-operations:
Operation 524: transmit WUS configuration, second signal configuration and third signal configuration.

In some embodiments, the wake-up signal configuration is arranged to configure time-frequency resources for the first receiver to monitor WUS(s). The second signal configuration is arranged to configure time-frequency resources for the first receiver to monitor second signal(s). The third signal configuration is arranged to configure time-frequency resources for the first receiver to monitor third signal(s). The wake-up signal configuration, the second signal configuration and the third signal configuration are three mutually independent signal configurations.

In some embodiments, the wake-up signal configuration is arranged to configure time-frequency resources for an aperiodic wake-up signal, the second signal configuration is arranged to configure time-frequency resources for an aperiodic second signal, and the third signal configuration is arranged to configure time-frequency resources for an aperiodic third signal.

In some embodiments, the wake-up signal configuration is arranged to configure time-frequency resources for an aperiodic wake-up signal, the second signal configuration is arranged to configure time-frequency resources for an aperiodic second signal, and the third signal configuration is arranged to configure time-frequency resources for a periodic third signal.

In some embodiments, the wake-up signal configuration is arranged to configure time-frequency resources for an aperiodic wake-up signal, the second signal configuration is arranged to configure time-frequency resources for a periodic second signal, and the third signal configuration is arranged to configure time-frequency resources for an aperiodic third signal.

In some embodiments, the wake-up signal configuration is arranged to configure time-frequency resources for an aperiodic wake-up signal, the second signal configuration is arranged to configure time-frequency resources for a periodic second signal, and the third signal configuration is arranged to configure time-frequency resources for a periodic third signal.

In some embodiments, the wake-up signal configuration is arranged to configure time-frequency resources for a periodic wake-up signal, the second signal configuration is arranged to configure time-frequency resources for an aperiodic second signal, and the third signal configuration is arranged to configure time-frequency resources for an aperiodic third signal.

In some embodiments, the wake-up signal configuration is arranged to configure time-frequency resources for a periodic wake-up signal, the second signal configuration is arranged to configure time-frequency resources for an aperiodic second signal, and the third signal configuration is arranged to configure time-frequency resources for a periodic third signal.

In some embodiments, the wake-up signal configuration is arranged to configure time-frequency resources for a periodic wake-up signal, the second signal configuration is arranged to configure time-frequency resources for a periodic second signal, and the third signal configuration is arranged to configure time-frequency resources for an aperiodic third signal.

In some embodiments, the wake-up signal configuration is arranged to configure time-frequency resources for a periodic wake-up signal, the second signal configuration is arranged to configure time-frequency resources for a periodic second signal, and the third signal configuration is arranged to configure time-frequency resources for a periodic third signal.

For a specific implementation manner in which the wake-up signal configuration, the second signal configuration and the third signal configuration are mutually independent, refer to the above configuration manner 4.

In summary, in the method according to this embodiment, by transmitting signal configuration to instruct the first receiver of the terminal device to perform at least one of cell synchronization or measurement evaluation in RRM measurement, the terminal device is enabled to perform RRM measurement using a receiver with lower power consumption, preventing the terminal device from waking up a second receiver with higher power consumption via the first receiver during RRM measurement, thereby reducing power consumption of the terminal device.

In addition, by instructing the first receiver to separately perform cell synchronization and measurement evaluation, it is possible to clearly define the signal based on which cell synchronization is performed through the first receiver and the signal based on which measurement evaluation is performed through the first receiver, thus avoiding confusion in a case where RRM measurement is performed through the first receiver.

FIG. 18 is a flowchart of a method for RRM management according to an exemplary embodiment of the present disclosure. The method is performed by a network device. The method includes:
Operation 620: Receive a terminal capability.

In some embodiments, the terminal capability is arranged to indicate whether the terminal device supports performing cell synchronization using a signal in WUS configuration.

Optionally, the terminal capability includes a first terminal capability, where the first terminal capability is arranged to indicate that the terminal device supports performing cell synchronization using a signal in WUS configuration.

Optionally, the terminal capability includes a second terminal capability, where the second terminal capability is arranged to indicate that the terminal device does not support performing cell synchronization using a signal in WUS configuration, or is arranged to indicate that the terminal device supports performing cell synchronization using first signal(s) determined by first signal configuration mutually independent of the wake-up signal configuration.

Optionally, the terminal capability includes a third terminal capability, where the third terminal capability is arranged to indicate that the terminal device supports performing cell synchronization using a signal in WUS configuration and supports performing cell synchronization using first signal(s) determined by first signal configuration mutually independent of the wake-up signal configuration. In some embodiments, the third terminal capability may also be understood as including both the first terminal capability and the second terminal capability.

In some embodiments, the signal(s) in the wake-up signal configuration includes first signal(s) or second signal(s).

For a specific implementation manner in which the wake-up signal configuration includes the first signal(s), refer to the above configuration manner 1.

For a specific implementation manner in which the wake-up signal configuration includes the second signal(s), refer to the above configuration manner 3.

For a specific implementation manner of the first signal(s) determined by the first signal configuration mutually independent of the wake-up signal configuration, refer to the above configuration manner 2.

Optionally, the terminal capability includes a fourth terminal capability, where the fourth terminal capability is arranged to indicate whether the first receiver supports receiving signal(s) having a first waveform, where the first waveform is obtained based on multi-carrier modulation. Multi-carrier refers to a modulation technique using multiple carriers within a fixed frequency band, such as OFDM.

Optionally, the terminal capability includes a fifth terminal capability, where the fifth terminal capability is arranged to indicate whether the first receiver supports receiving signal(s) having a second waveform, where the second waveform is obtained based on single-carrier modulation. Single-carrier refers to a modulation technique using only one carrier within a fixed frequency band, such as 2-ASK. The single-carrier modulation manner includes at least one of single-carrier amplitude modulation, single-carrier frequency modulation, and single-carrier phase modulation.

It should be noted that the above operation 620 is generally performed before operation 520.

In summary, in the method according to this embodiment, by receiving the terminal capability, the network device can learn the capability supported by the terminal device in advance, so that the signal configuration of the network device can clearly instruct the first receiver to perform cell synchronization based on which signal and perform measurement evaluation based on which signal, thereby avoiding confusion in a case where RRM measurement is performed through the first receiver.

FIG. 19 is a structural block diagram of an apparatus for RRM measurement according to an exemplary embodiment of the present disclosure. The apparatus includes an execution module 1910.

The execution module 1910 is arranged to perform, through a first receiver, at least one of cell synchronization or measurement evaluation in RRM measurement.

In some embodiments, the apparatus receives signal configuration transmitted by a network device, where the signal configuration is arranged to configure time-frequency resources for at least one type of signal(s), and the at least one type of signal(s) is configured for the first receiver to perform at least one of cell synchronization or measurement evaluation. Or in other words, the signal configuration is arranged to configure, for the first receiver, first time-frequency resources for monitoring a signal arranged to perform cell synchronization, and/or second time-frequency resources for monitoring a signal arranged to perform measurement evaluation. In the embodiment of the present disclosure, the term "monitor" may be understood as at least one of detecting, measuring or receiving.

In some embodiments, the apparatus receives signal configuration corresponding to a signal arranged to perform cell synchronization transmitted by the network device. Based on the signal configuration, the apparatus monitors, through the first receiver on the first time-frequency resources, the signal arranged to perform cell synchronization.

In some embodiments, the apparatus receives signal configuration corresponding to a signal arranged to perform measurement evaluation transmitted by the network device. Based on the signal configuration, the apparatus monitors, through the first receiver on the second time-frequency resources, the signal arranged to perform measurement evaluation.

In some embodiments, the apparatus receives signal configuration corresponding to a signal arranged to perform cell synchronization and measurement evaluation transmitted by the network device. Based on the signal configuration, the apparatus monitors, through the first receiver on third time-frequency resources, the signal arranged to perform cell synchronization and measurement evaluation.

In some embodiments, the signal arranged to perform cell synchronization and the signal arranged to perform measurement evaluation are the same signal or the same group of signals. For example, the first signal(s) is arranged to perform both cell synchronization and measurement evaluation. Optionally, the first signal(s) is a Lower-power Synchronization Signal (LP-SS), for example, the first signal(s) is an LP-SSB. In some embodiments, the signal arranged to perform cell synchronization and the signal arranged to perform measurement evaluation are different signals, for example, the signal arranged to perform cell synchronization is an LP-SS, and the signal arranged to perform measurement evaluation is an LP-RS.

In some embodiments, RRM measurement time for the apparatus to perform RRM measurement meets a measurement time requirement.

In some embodiments, the apparatus further includes a receiving module 1920.

The receiving module 1920 is configured to receive the signal configuration.

In some embodiments, the signal configuration is arranged to configure time-frequency resources for at least one type of signal(s). Optionally, the at least one type of signal(s) includes at least one of the following:
first signal(s);
second signal(s);
third signal(s); or
WUS(s).

In some embodiments, the first signal(s) is arranged to perform cell synchronization and measurement evaluation.

Optionally, the signal arranged to perform cell synchronization and the signal arranged to perform measurement evaluation are two types of signals. For example, the signal arranged to perform cell synchronization is a first sub-signal in the first signal(s), and the signal arranged to perform measurement evaluation is a second sub-signal in the first signal(s). Different sub-signals are arranged to implement different functions.

Optionally, the signal arranged to perform cell synchronization and the signal arranged to perform measurement evaluation are the same type of signal(s). For example, an LP-SS is arranged to perform both cell synchronization and measurement evaluation. That is, one type of signal(s) can implement multiple functions.

In some embodiments, the first signal(s) is(are) signal(s) having a first waveform, where the first waveform is obtained based on multi-carrier modulation. Multi-carrier refers to a modulation technique using multiple carriers within a fixed frequency band, such as Orthogonal Frequency Division Multiplexing (OFDM). Or the first signal(s) is(are) signal(s) having a second waveform, where the second waveform is obtained based on single-carrier modulation. Single-carrier refers to a modulation technique using only one carrier within a fixed frequency band, such as 2-ASK.

In some embodiments, the second signal(s) is(are) arranged to perform cell synchronization.

It should be understood that the second signal(s) herein is(are) signal(s) only arranged to perform cell synchronization, or may be understood as a sub-signal arranged to perform cell synchronization in the first signal(s) above.

In some embodiments, the second signal(s) is(are) signal(s) having a first waveform, where the first waveform is obtained based on multi-carrier modulation, such as OFDM. Or the second signal(s) is(are) signal(s) having a second waveform, where the second waveform is obtained based on single-carrier modulation, such as 2-ASK.

In some embodiments, the third signal(s) is(are) arranged to perform measurement evaluation.

It should be understood that the third signal(s) herein may also be a signal arranged to perform cell synchronization and measurement evaluation. Or in other words, the third signal(s) is(are) a sub-signal arranged to perform measurement evaluation in the first signal(s) above.

In some embodiments, the third signal(s) is(are) signal(s) having a first waveform, where the first waveform is obtained based on multi-carrier modulation, such as OFDM. Or the third signal(s) is(are) signal(s) having a second waveform, where the second waveform is obtained based on single-carrier modulation, such as 2-ASK.

In some embodiments, the WUS(s) is(are) signal(s) having a first waveform, where the first waveform is obtained based on multi-carrier modulation, such as OFDM. Or the WUS(s) is(are) signal(s) having a second waveform, where the second waveform is obtained based on single-carrier modulation, such as 2-ASK.

In some embodiments, the configuration manner of the above signal configuration includes one or more of the following:
Configuration manner 1: WUS configuration. The wake-up signal configuration is arranged to configure time-frequency resources for the first receiver to monitor WUS(s). The wake-up signal configuration includes first signal(s), where the first signal(s) is arranged to perform cell synchronization and measurement evaluation. Or in other words, the wake-up signal configuration is arranged to configure time-frequency resources for the first receiver to monitor the first signal(s), where the time-frequency resources for monitoring the first signal(s) are at least one time-frequency resource among the time-frequency resources for monitoring the wake-up signal. The first receiver monitors the first signal(s) on the at least one time-frequency resource for monitoring the wake-up signal.
Configuration manner 2: mutually independent wake-up signal configuration and first signal configuration. The wake-up signal configuration is arranged to configure time-frequency resources for the first receiver to monitor WUS(s). The first signal configuration is arranged to configure time-frequency resources for the first receiver to monitor first signal(s), where the first signal(s) is arranged to perform cell synchronization and measurement evaluation.
Configuration manner 3: mutually independent wake-up signal configuration and third signal configuration. The wake-up signal configuration is arranged to configure time-frequency resources for the first receiver to monitor WUS(s). The wake-up signal configuration includes second signal(s), where the second signal(s) is(are) arranged to perform cell synchronization. Or in other words, the wake-up signal configuration is arranged to configure time-frequency resources for the first receiver to monitor the second signal(s), where the time-frequency resources for monitoring the second signal(s) are at least one time-frequency resource among the time-frequency resources for monitoring the wake-up signal. The first receiver monitors the second signal(s) on the at least one time-frequency resource for monitoring the wake-up signal. The third signal configuration is arranged to configure time-frequency resources for the first receiver to monitor third signal(s), where the third signal(s) is(are) arranged to perform measurement evaluation.
Configuration manner 4: mutually independent wake-up signal configuration, second signal configuration and third signal configuration. The wake-up signal configuration is arranged to configure time-frequency resources for the first receiver to monitor WUS(s). The second signal configuration is arranged to configure time-frequency resources for the first receiver to monitor second signal(s), where the second signal(s) is(are) arranged to perform cell synchronization. The third signal configuration is arranged to configure time-frequency resources for the first receiver to monitor third signal(s), where the third signal(s) is(are) arranged to perform measurement evaluation.

For configuration manner 1:
The receiving module 1920 is further configured to receive the wake-up signal configuration.

In some embodiments, the wake-up signal configuration is arranged to configure time-frequency resources for the first receiver to monitor WUS(s). In some embodiments, the wake-up signal configuration includes first signal(s). Or in other words, the wake-up signal configuration is arranged to configure time-frequency resources for the first receiver to monitor the first signal(s), where the time-frequency resources for monitoring the first signal(s) are at least one time-frequency resource among the time-frequency resources for monitoring the wake-up signal. The first receiver monitors the first signal(s) on the at least one time-frequency resource for monitoring the wake-up signal.

The execution module 1910 is further configured to, in a case where the wake-up signal configuration includes the first signal(s), perform, through the first receiver, RRM measurement on a target cell based on the first signal(s).

In some embodiments, the first signal(s) is arranged to perform cell synchronization and measurement evaluation.

For a specific implementation manner in which the wake-up signal configuration includes the first signal(s), refer to the above configuration manner 1.

For configuration manner 2:
The receiving module 1920 is further configured to receive the wake-up signal configuration and the first signal configuration.

In some embodiments, the wake-up signal configuration is arranged to configure time-frequency resources for the first receiver to monitor WUS(s). The first signal configuration is arranged to configure time-frequency resources for the first receiver to monitor first signal(s), where the first signal(s) is arranged to perform cell synchronization and measurement evaluation. The wake-up signal configuration and the first signal configuration are two mutually independent signal configurations.

The execution module 1910 is further configured to, in a case where the wake-up signal configuration and the first signal configuration are mutually independent, perform, through the first receiver, cell synchronization and measurement evaluation based on the first signal(s).

In some embodiments, the first signal(s) is arranged to perform cell synchronization and measurement evaluation.

For a specific implementation manner in which the wake-up signal configuration and the first signal configuration are mutually independent, refer to the above configuration manner 2.

For configuration manner 3:
The receiving module 1920 is further configured to receive the wake-up signal configuration and the third signal configuration.

In some embodiments, the wake-up signal configuration is arranged to configure time-frequency resources for the first receiver to monitor WUS(s). In some embodiments, the wake-up signal configuration includes second signal(s). Or in other words, the wake-up signal configuration is arranged to configure time-frequency resources for the first receiver to monitor the second signal(s), where the time-frequency resources for monitoring the second signal(s) are at least one time-frequency resource among the time-frequency resources for monitoring the wake-up signal. The first receiver monitors the second signal(s) on the at least one time-frequency resource for monitoring the wake-up signal.

In some embodiments, the third signal configuration is arranged to configure time-frequency resources for the first receiver to monitor third signal(s). The wake-up signal configuration and the third signal configuration are two mutually independent signal configurations.

The execution module 1910 is further configured to, in a case where the wake-up signal configuration includes the second signal(s), and the wake-up signal configuration and the third signal configuration are mutually independent, perform, through the first receiver, cell synchronization based on the second signal(s) and measurement evaluation based on the third signal(s).

For a specific implementation manner in which the wake-up signal configuration and the third signal configuration are mutually independent, refer to the above configuration manner 3.

For configuration manner 4:
The receiving module 1920 is further configured to receive the wake-up signal configuration, the second signal configuration and the third signal configuration.

In some embodiments, the wake-up signal configuration is arranged to configure time-frequency resources for the first receiver to monitor WUS(s). The second signal configuration is arranged to configure time-frequency resources for the first receiver to monitor second signal(s). The third signal configuration is arranged to configure time-frequency resources for the first receiver to monitor third signal(s). The wake-up signal configuration, the second signal configuration and the third signal configuration are three mutually independent signal configurations.

In some embodiments, the second signal(s) is(are) arranged to perform cell synchronization. The third signal(s) is(are) arranged to perform measurement evaluation.

The execution module 1910 is further configured to, in a case where the wake-up signal configuration, the second signal configuration and the third signal configuration are mutually independent, perform, through the first receiver, cell synchronization based on the second signal(s) and perform measurement evaluation based on the third signal(s).

For a specific implementation manner in which the wake-up signal configuration, the second signal configuration and the third signal configuration are mutually independent, refer to the above configuration manner 4.

In some embodiments, the above apparatus further includes a transmitting module 1930.

The transmitting module 1930 is configured to report the terminal capability.

In some embodiments, the terminal capability is arranged to indicate whether the apparatus supports performing cell synchronization using a signal in WUS configuration.

Optionally, the terminal capability includes a first terminal capability, where the first terminal capability is arranged to indicate that the apparatus supports performing cell synchronization using a signal in WUS configuration.

Optionally, the terminal capability includes a second terminal capability, where the second terminal capability is arranged to indicate that the apparatus does not support performing cell synchronization using a signal in WUS configuration, or is arranged to indicate that the apparatus supports performing cell synchronization using first signal(s) determined by first signal configuration mutually independent of the wake-up signal configuration.

Optionally, the terminal capability includes a third terminal capability, where the third terminal capability is arranged to indicate that the apparatus supports performing cell synchronization using a signal in WUS configuration and supports performing cell synchronization using first signal(s) determined by first signal configuration mutually independent of the wake-up signal configuration. In some embodiments, the third terminal capability may also be understood as including both the first terminal capability and the second terminal capability.

Optionally, the terminal capability includes a fourth terminal capability, where the fourth terminal capability is arranged to indicate whether the first receiver supports receiving signal(s) having a first waveform, where the first waveform is obtained based on multi-carrier modulation.

Optionally, the terminal capability includes a fifth terminal capability, where the fifth terminal capability is arranged to indicate whether the first receiver supports receiving signal(s) having a second waveform, where the second waveform is obtained based on single-carrier modulation.

For a specific implementation manner of reporting the terminal capability, refer to the above operation 420.

It should be noted that, in a case where the apparatus provided in the above embodiment implements its functions, only the division of the above functional modules is used as an example for illustration. In practical applications, the above functions may be allocated to and completed by different functional modules according to practical needs, that is, the content structure of the device is divided into different functional modules to complete all or part of the functions described above.

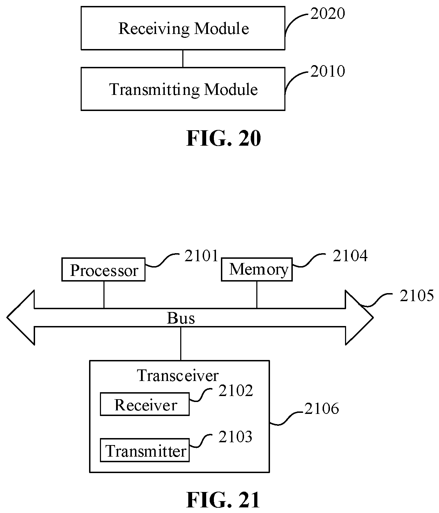

FIG. 20 is a structural block diagram of an apparatus for RRM measurement according to an exemplary embodiment of the present disclosure. The apparatus includes an transmitting module.

The transmitting module 2010 is configured to transmit signal configuration.

In some embodiments, the signal configuration is arranged to configure time-frequency resources for at least one type of signal(s). Optionally, the at least one type of signal(s) includes at least one of the following:
first signal(s);
a second signal(s);
a third signal(s); or
WUS(s).

In some embodiments, the first signal(s) is arranged to perform cell synchronization and measurement evaluation.

Optionally, the signal arranged to perform cell synchronization and the signal arranged to perform measurement evaluation are two types of signals. For example, the signal arranged to perform cell synchronization is a first sub-signal in the first signal(s), and the signal arranged to perform measurement evaluation is a second sub-signal in the first signal(s). Different sub-signals are configured to implement different functions.

Optionally, the signal arranged to perform cell synchronization and the signal arranged to perform measurement evaluation are the same type of signal(s). For example, an LP-SS is arranged to perform both cell synchronization and measurement evaluation. That is, one type of signal(s) can implement multiple functions.

In some embodiments, the first signal(s) is(are) signal(s) having a first waveform, where the first waveform is obtained based on multi-carrier modulation. Multi-carrier refers to a modulation technique using multiple carriers within a fixed frequency band, such as Orthogonal Frequency Division Multiplexing (OFDM). Or the first signal(s) is(are) signal(s) having a second waveform, where the second waveform is obtained based on single-carrier modulation. Single-carrier refers to a modulation technique using only one carrier within a fixed frequency band, such as 2-ASK.

In some embodiments, the second signal(s) is(are) arranged to perform cell synchronization.

It should be understood that the second signal(s) herein is(are) signal(s) only arranged to perform cell synchronization, or may be understood as a sub-signal arranged to perform cell synchronization in the first signal(s) above.

In some embodiments, the second signal(s) is(are) signal(s) having a first waveform, where the first waveform is obtained based on multi-carrier modulation, such as OFDM. Or the second signal(s) is(are) signal(s) having a second waveform, where the second waveform is obtained based on single-carrier modulation, such as 2-ASK.

In some embodiments, the third signal(s) is(are) arranged to perform measurement evaluation.

It should be understood that the third signal(s) herein may also be a signal arranged to perform cell synchronization and measurement evaluation. Or in other words, the third signal(s) is(are) a sub-signal arranged to perform measurement evaluation in the first signal(s) above.

In some embodiments, the third signal(s) is(are) signal(s) having a first waveform, where the first waveform is obtained based on multi-carrier modulation, such as OFDM. Or the third signal(s) is(are) signal(s) having a second waveform, where the second waveform is obtained based on single-carrier modulation, such as 2-ASK.

In some embodiments, the WUS(s) is(are) signal(s) having a first waveform, where the first waveform is obtained based on multi-carrier modulation, such as OFDM. Or the WUS(s) is(are) signal(s) having a second waveform, where the second waveform is obtained based on single-carrier modulation, such as 2-ASK.

In some embodiments, the configuration manner of the above signal configuration includes one or more of the following:
Configuration manner 1: WUS configuration. The wake-up signal configuration is arranged to configure time-frequency resources for the first receiver to monitor WUS(s). The wake-up signal configuration includes first signal(s), where the first signal(s) is arranged to perform cell synchronization and measurement evaluation. Or in other words, the wake-up signal configuration is arranged to configure time-frequency resources for the first receiver to monitor the first signal(s), where the time-frequency resources for monitoring the first signal(s) are at least one time-frequency resource among the time-frequency resources for monitoring the wake-up signal. The first receiver monitors the first signal(s) on the at least one time-frequency resource for monitoring the wake-up signal.
Configuration manner 2: a mutually independent wake-up signal configuration and first signal configuration. The wake-up signal configuration is arranged to configure time-frequency resources for the first receiver to monitor WUS(s). The first signal configuration is arranged to configure time-frequency resources for the first receiver to monitor first signal(s), where the first signal(s) is arranged to perform cell synchronization and measurement evaluation.
Configuration manner 3: a mutually independent wake-up signal configuration and third signal configuration. The wake-up signal configuration is arranged to configure time-frequency resources for the first receiver to monitor WUS(s). The wake-up signal configuration includes second signal(s), where the second signal(s) is(are) arranged to perform cell synchronization. Or in other words, the wake-up signal configuration is arranged to configure time-frequency resources for the first receiver to monitor the second signal(s), where the time-frequency resources for monitoring the second signal(s) are at least one time-frequency resource among the time-frequency resources for monitoring the wake-up signal. The first receiver monitors the second signal(s) on the at least one time-frequency resource for monitoring the wake-up signal. The third signal configuration is arranged to configure time-frequency resources for the first receiver to monitor third signal(s), where the third signal(s) is(are) arranged to perform measurement evaluation.
Configuration manner 4: a mutually independent wake-up signal configuration, second signal configuration and third signal configuration. The wake-up signal configuration is arranged to configure time-frequency resources for the first receiver to monitor WUS(s). The second signal configuration is arranged to configure time-frequency resources for the first receiver to monitor second signal(s), where the second signal(s) is(are) arranged to perform cell synchronization. The third signal configuration is arranged to configure time-frequency resources for the first receiver to monitor third signal(s), where the third signal(s) is(are) arranged to perform measurement evaluation.

The transmitting module 2010 is further configured to transmit the wake-up signal configuration.

In some embodiments, the wake-up signal configuration is arranged to configure time-frequency resources for the first receiver to monitor WUS(s). In some embodiments, the wake-up signal configuration includes first signal(s). Or in other words, the wake-up signal configuration is arranged to configure time-frequency resources for the first receiver to monitor the first signal(s), where the time-frequency resources for monitoring the first signal(s) are at least one time-frequency resource among the time-frequency resources for monitoring the wake-up signal. The first receiver monitors the first signal(s) on the at least one time-frequency resource for monitoring the wake-up signal.

In some embodiments, the wake-up signal configuration is arranged to configure time-frequency resources for aperiodic WUS burst(s), and each or at least one WUS burst includes at least one first signal. The at least one first signal is(are) periodic, or the at least one first signal is(are) aperiodic.

In some embodiments, the wake-up signal configuration is arranged to configure time-frequency resources for bursts of the periodic wake-up signal, and each or at least one WUS burst includes at least one first signal. The at least one first signal is(are) periodic, or the at least one first signal is(are) aperiodic.

For a specific implementation manner in which the wake-up signal configuration includes the first signal(s), refer to the above configuration manner 1.

The transmitting module 2010 is further configured to transmit the wake-up signal configuration and the first signal configuration.

In some embodiments, the wake-up signal configuration and the first signal configuration are mutually independent. The wake-up signal configuration is arranged to configure time-frequency resources for the first receiver to monitor WUS(s), and the first signal configuration is arranged to configure time-frequency resources for the first receiver to monitor first signal(s), where the first signal(s) is arranged to perform cell synchronization and measurement evaluation.

In some embodiments, the wake-up signal configuration is arranged to configure time-frequency resources for an aperiodic wake-up signal, and the first signal configuration is arranged to configure time-frequency resources for an aperiodic first signal.

In some embodiments, the wake-up signal configuration is arranged to configure time-frequency resources for an aperiodic wake-up signal, and the first signal configuration is arranged to configure time-frequency resources for a periodic first signal.

In some embodiments, the wake-up signal configuration is arranged to configure time-frequency resources for a periodic wake-up signal, and the first signal configuration is arranged to configure time-frequency resources for a periodic first signal.

In some embodiments, the wake-up signal configuration is arranged to configure time-frequency resources for a periodic wake-up signal, and the first signal configuration is arranged to configure time-frequency resources for an aperiodic first signal.

For a specific implementation manner in which the wake-up signal configuration and the first signal configuration are mutually independent, refer to the above configuration manner 2.

The transmitting module 2010 is further configured to transmit the wake-up signal configuration and the third signal configuration.

In some embodiments, the wake-up signal configuration is arranged to configure time-frequency resources for the first receiver to monitor WUS(s). In some embodiments, the wake-up signal configuration includes second signal(s). Or in other words, the wake-up signal configuration is arranged to configure time-frequency resources for the first receiver to monitor the second signal(s), where the time-frequency resources for monitoring the second signal(s) are at least one time-frequency resource among the time-frequency resources for monitoring the wake-up signal. The first receiver monitors the second signal(s) on the at least one time-frequency resource for monitoring the wake-up signal. In some embodiments, the third signal configuration is arranged to configure time-frequency resources for the first receiver to monitor third signal(s). The wake-up signal configuration and the third signal configuration are two mutually independent signal configurations.

In some embodiments, the wake-up signal configuration is arranged to configure time-frequency resources for aperiodic WUS burst(s), each or at least one WUS burst includes at least one second signal, and the third signal configuration is arranged to configure time-frequency resources for an aperiodic third signal.

In some embodiments, the wake-up signal configuration is arranged to configure time-frequency resources for bursts of the aperiodic wake-up signal, each or at least one WUS burst includes at least one second signal, and the third signal configuration is arranged to configure time-frequency resources for a periodic third signal.

In some embodiments, the wake-up signal configuration is arranged to configure time-frequency resources for periodic WUS burst(s), each or at least one WUS burst includes at least one second signal, and the third signal configuration is arranged to configure time-frequency resources for a periodic third signal.

In some embodiments, the wake-up signal configuration is arranged to configure time-frequency resources for bursts of the periodic wake-up signal, each or at least one WUS burst includes at least one second signal, and the third signal configuration is arranged to configure time-frequency resources for an aperiodic third signal.

For a specific implementation manner in which the wake-up signal configuration and the third signal configuration are mutually independent, refer to the above configuration manner 3.

The transmitting module 2010 is further configured to transmit the wake-up signal configuration, the second signal configuration and the third signal configuration.

In some embodiments, the wake-up signal configuration is arranged to configure time-frequency resources for the first receiver to monitor WUS(s). The second signal configuration is arranged to configure time-frequency resources for the first receiver to monitor second signal(s). The third signal configuration is arranged to configure time-frequency resources for the first receiver to monitor third signal(s). The wake-up signal configuration, the second signal configuration and the third signal configuration are three mutually independent signal configurations.

In some embodiments, the wake-up signal configuration is arranged to configure time-frequency resources for an aperiodic wake-up signal, the second signal configuration is arranged to configure time-frequency resources for an aperiodic second signal, and the third signal configuration is arranged to configure time-frequency resources for an aperiodic third signal.

In some embodiments, the wake-up signal configuration is arranged to configure time-frequency resources for an aperiodic wake-up signal, the second signal configuration is arranged to configure time-frequency resources for an aperiodic second signal, and the third signal configuration is arranged to configure time-frequency resources for a periodic third signal.

In some embodiments, the wake-up signal configuration is arranged to configure time-frequency resources for an aperiodic wake-up signal, the second signal configuration is arranged to configure time-frequency resources for a periodic second signal, and the third signal configuration is arranged to configure time-frequency resources for an aperiodic third signal.

In some embodiments, the wake-up signal configuration is arranged to configure time-frequency resources for an aperiodic wake-up signal, the second signal configuration is arranged to configure time-frequency resources for a periodic second signal, and the third signal configuration is arranged to configure time-frequency resources for a periodic third signal.

In some embodiments, the wake-up signal configuration is arranged to configure time-frequency resources for a periodic wake-up signal, the second signal configuration is arranged to configure time-frequency resources for an aperiodic second signal, and the third signal configuration is arranged to configure time-frequency resources for an aperiodic third signal.

In some embodiments, the wake-up signal configuration is arranged to configure time-frequency resources for a periodic wake-up signal, the second signal configuration is arranged to configure time-frequency resources for an aperiodic second signal, and the third signal configuration is arranged to configure time-frequency resources for a periodic third signal.

In some embodiments, the wake-up signal configuration is arranged to configure time-frequency resources for a periodic wake-up signal, the second signal configuration is arranged to configure time-frequency resources for a periodic second signal, and the third signal configuration is arranged to configure time-frequency resources for an aperiodic third signal.

In some embodiments, the wake-up signal configuration is arranged to configure time-frequency resources for a periodic wake-up signal, the second signal configuration is arranged to configure time-frequency resources for a periodic second signal, and the third signal configuration is arranged to configure time-frequency resources for a periodic third signal.

For a specific implementation manner in which the wake-up signal configuration, the second signal configuration and the third signal configuration are mutually independent, refer to the above configuration manner 4.

In some embodiments, the above apparatus further includes a receiving module 2020.

The receiving module 2020 is further configured to receive the terminal capability.

In some embodiments, the terminal capability is arranged to indicate whether the terminal device supports performing cell synchronization using a signal in WUS configuration.

Optionally, the terminal capability includes a first terminal capability, where the first terminal capability is arranged to indicate that the terminal device supports performing cell synchronization using a signal in WUS configuration.

Optionally, the terminal capability includes a second terminal capability, where the second terminal capability is arranged to indicate that the terminal device does not support performing cell synchronization using a signal in WUS configuration, or is arranged to indicate that the terminal device supports performing cell synchronization using first signal(s) determined by first signal configuration mutually independent of the wake-up signal configuration.

Optionally, the terminal capability includes a third terminal capability, where the third terminal capability is arranged to indicate that the terminal device supports performing cell synchronization using a signal in WUS configuration and supports performing cell synchronization using first signal(s) determined by first signal configuration mutually independent of the wake-up signal configuration. In some embodiments, the third terminal capability may also be understood as including both the first terminal capability and the second terminal capability.

In some embodiments, the signal(s) in the wake-up signal configuration includes first signal(s) or second signal(s).

For a specific implementation manner in which the wake-up signal configuration includes the first signal(s), refer to the above configuration manner 1.

For a specific implementation manner in which the wake-up signal configuration includes the second signal(s), refer to the above configuration manner 3.

For a specific implementation manner of the first signal(s) determined by the first signal configuration mutually independent of the wake-up signal configuration, refer to the above configuration manner 2.

Optionally, the terminal capability includes a fourth terminal capability, where the fourth terminal capability is arranged to indicate whether the first receiver supports receiving signal(s) having a first waveform, where the first waveform is obtained based on multi-carrier modulation. Multi-carrier refers to a modulation technique using multiple carriers within a fixed frequency band, such as OFDM.

Optionally, the terminal capability includes a fifth terminal capability, where the fifth terminal capability is arranged to indicate whether the first receiver supports receiving signal(s) having a second waveform, where the second waveform is obtained based on single-carrier modulation. Single-carrier refers to a modulation technique using only one carrier within a fixed frequency band, such as 2-ASK. The single-carrier modulation manner includes at least one of single-carrier amplitude modulation, single-carrier frequency modulation, or single-carrier phase modulation.

It should be noted that, in a case where the apparatus provided in the above embodiment implements its functions, only the division of the above functional modules is used as an example for illustration. In practical applications, the above functions may be allocated to and completed by different functional modules according to practical needs, that is, the content structure of the device is divided into different functional modules to complete all or part of the functions described above.

FIG. 21 is a schematic structural diagram of a communication device according to an embodiment of the present disclosure. The communication device may include: a processor 2101, a receiver 2102, a transmitter 2103, a memory 2104, and a bus 2105.

The processor 2101 includes one or more processing cores. The processor 2101 executes various functional applications and information processing by running software programs and modules.

The receiver 2102 and the transmitter 2103 may be implemented as a transceiver 2106, and the transceiver 2106 may be a communication chip.

The memory 2104 is connected to the processor 2101 via the bus 2105. The memory 2104 may be configured to store a computer program, and the processor 2101 is configured to execute the computer program to implement the operations performed by the terminal device or the network device in the above method embodiments.

In addition, the memory 2104 may be implemented by any type of volatile or non-volatile storage device or a combination thereof. Volatile or non-volatile storage devices include, but are not limited to: RAM (Random-Access Memory), ROM (Read-Only Memory), EPROM (Erasable Programmable Read-Only Memory), EEPROM (Electrically Erasable Programmable Read-Only Memory), flash memory or other solid-state storage technologies, CD-ROM (Compact Disc Read-Only Memory), DVD (Digital Video Disc) or other optical storage, magnetic cassettes, magnetic tape, magnetic disk storage or other magnetic storage devices.

An embodiment of the present disclosure further provides a computer-readable storage medium, where a computer program is stored in the storage medium. The computer program is executed by a processor of a terminal device or a network device to implement the operations in the above RRM measurement method. In some embodiments, the computer-readable storage medium may include: ROM (Read-Only Memory), RAM (Random-Access Memory), SSD (Solid State Drives), optical disc, or the like. The RAM may include ReRAM (Resistance Random Access Memory) and DRAM (Dynamic Random Access Memory).

An embodiment of the present disclosure further provides a chip. The chip includes a programmable logic circuit and/or program instructions, and in a case where the chip runs on a terminal device or a network device, is configured to implement the operations in the above RRM measurement method.

An embodiment of the present disclosure further provides a computer program product or a computer program. The computer program product or the computer program includes computer instructions, and the computer instructions are stored in a computer-readable storage medium. A processor of a terminal device or a network device reads and executes the computer instructions from the computer-readable storage medium to implement the operations in the above RRM measurement method.

A person skilled in the art should appreciate that the functions described in the embodiments of the present disclosure may be implemented by hardware, software, firmware, or any combination thereof in one or more of the above examples. In a case where implemented by software, these functions may be stored in a computer-readable medium or transmitted as one or more instructions or code on a computer-readable medium. Computer-readable media include computer storage media and communication media, where communication media include any medium that facilitates transfer of a computer program from one place to another. A storage medium may be any available medium that can be accessed by a general-purpose or special-purpose computer.

The above are merely exemplary embodiments of the present disclosure and are not intended to limit the present disclosure. Any modifications, equivalent replacements, improvements, etc. made within the spirit and principles of the present disclosure shall be included in the protection scope of the present disclosure.

## Claims

1. A method for radio resource management (RRM) measurement, wherein the method is performed by a terminal device, the terminal device is equipped with a first receiver and a second receiver, and power consumption of the first receiver is lower than power consumption of the second receiver, and the method comprises:
performing, through the first receiver, at least one of cell synchronization or measurement evaluation in RRM measurement.

2. The method according to claim 1, wherein the performing, through the first receiver, at least one of cell synchronization or measurement evaluation in RRM measurement comprises:
in a case where wake-up signal (WUS) configuration includes first signal(s), performing, through the first receiver, the RRM measurement on a target cell based on the first signal(s);
wherein the WUS configuration is arranged to configure time-frequency resources for the first receiver to monitor WUS(s), and the first signal(s) is(are) arranged to perform the cell synchronization and the measurement evaluation.

3. The method according to claim 2, wherein the performing, through the first receiver, the RRM measurement on the target cell based on the first signal(s) comprises:
in a case where the target cell satisfies a first condition, performing, through the first receiver, the measurement evaluation on the target cell based on the first signal(s); or
in a case where the target cell satisfies a second condition, performing, through the first receiver, the cell synchronization and the measurement evaluation on the target cell based on the first signal(s).

4. The method according to claim 3, wherein in the case where the target cell satisfies the first condition, performing, through the first receiver, the measurement evaluation on the target cell based on the first signal(s) comprises:
in a case where the target cell is an intra-frequency cell, performing, through the first receiver, the measurement evaluation on the intra-frequency cell based on the first signal(s); or
in a case where the target cell is an inter-frequency cell and the inter-frequency cell satisfies a target condition, performing, through the first receiver, the measurement evaluation on the inter-frequency cell based on the first signal(s).

5. The method according to claim 3 or 4, wherein the performing, through the first receiver, the measurement evaluation on the target cell based on the first signal(s) comprises one or more of the following:
performing, through the first receiver, the measurement evaluation on the target cell according to a period of the first signal(s); or
performing, through the first receiver, the measurement evaluation on the target cell according to a period of a measurement gap, wherein the measurement gap overlaps at least one time-domain position of the first signal(s).

6. The method according to claim 5, further comprising:
determining time information of the target cell based on time information of a serving cell.

7. The method according to claim 3, wherein in the case where the target cell satisfies the second condition, performing, through the first receiver, the cell synchronization and the measurement evaluation on the target cell based on the first signal(s) comprises:
in a case where the target cell is an inter-frequency cell, performing, through the first receiver, the cell synchronization and the measurement evaluation on the inter-frequency cell based on the first signal(s); or
in a case where the target cell is the inter-frequency cell and the inter-frequency cell does not satisfy a target condition, performing, through the first receiver, the cell synchronization and the measurement evaluation on the inter-frequency cell based on the first signal(s).

8. The method according to claim 7, wherein the performing, through the first receiver, the cell synchronization and the measurement evaluation on the inter-frequency cell based on the first signal(s) comprises:
performing, through the first receiver, the cell synchronization based on n first signals, and the measurement evaluation on the inter-frequency cell based on m first signals;
wherein the n first signals and the m first signals are consecutive (n+m) first signals, n is a positive integer, and m is a positive integer.

9. The method according to claim 8, wherein RRM measurement time of the terminal device satisfies a measurement time requirement; and
the RRM measurement time comprises: time for performing the cell synchronization using the n first signals, and time for performing the measurement evaluation using the m first signals.

10. The method according to claim 4 or 7, wherein the target condition comprises one or more of the following:
the inter-frequency cell and the serving cell belong to a same frequency band; and
a power difference between the inter-frequency cell and the serving cell is less than a preset threshold.

11. The method according to any one of claims 2 to 10, wherein
the WUS configuration is arranged to configure time-frequency resources for aperiodic WUS burst(s), and each or at least one WUS burst includes at least one of the first signal(s); or
the WUS configuration is arranged to configure time-frequency resources for periodic WUS burst(s), and each or at least one WUS burst includes at least one of the first signal(s).

12. The method according to any one of claims 2 to 11, further comprising:
receiving the WUS configuration.

13. The method according to claim 1, wherein the performing, through the first receiver, at least one of cell synchronization or measurement evaluation in RRM measurement comprises:
in a case where WUS configuration and first signal configuration are mutually independent, performing, through the first receiver, the cell synchronization and the measurement evaluation based on the first signal(s);
wherein the WUS configuration is arranged to configure time-frequency resources for the first receiver to monitor WUS(s), the first signal configuration is arranged to configure time-frequency resources for the first receiver to monitor the first signal(s), and the first signal(s) is(are) arranged to perform the cell synchronization and the measurement evaluation.

14. The method according to claim 13, further comprising:
in a case where the terminal device has scheduling constraints, receiving the WUS(s) and the first signal(s) at different time-domain positions.

15. The method according to claim 14, wherein the terminal device having scheduling constraints comprises at least one of the following:
the terminal device does not support simultaneous reception of the WUS(s) and the first signal(s);
the terminal device does not support simultaneous reception in inter-frequency carrier aggregation; or
the terminal device does not expect simultaneous reception of the WUS(s) and the first signal(s).

16. The method according to claim 14, wherein a distance between the different time-domain positions is greater than or equal to a minimum switch duration for the terminal device to switch between different receiving frequency bands.

17. The method according to claim 13, further comprising:
in a case where the terminal device has no scheduling constraints, receiving the WUS(s) and the first signal(s) at a same time-domain position, or overlapping time-domain positions, or partially overlapping time-domain positions.

18. The method according to claim 17, wherein the terminal device having no scheduling constraints comprises at least one of the following:
the terminal device supports simultaneous reception of the WUS(s) and the first signal(s);
the terminal device supports simultaneous reception in inter-frequency carrier aggregation; or
the terminal device has a first capability, wherein the first capability indicates simultaneous reception of the WUS(s) and the first signal(s).

19. The method according to any one of claims 13 to 18, wherein
the WUS configuration is arranged to configure time-frequency resources for aperiodic WUS(s), and the first signal configuration is arranged to configure time-frequency resources for aperiodic first signal(s); or
the WUS configuration is arranged to configure time-frequency resources for aperiodic WUS(s), and the first signal configuration is arranged to configure time-frequency resources for periodic first signal(s); or
the WUS configuration is arranged to configure time-frequency resources for periodic WUS(s), and the first signal configuration is arranged to configure time-frequency resources for periodic first signal(s); or
the WUS configuration is arranged to configure time-frequency resources for periodic WUS(s), and the first signal configuration is arranged to configure time-frequency resources for aperiodic first signal(s).

20. The method according to any one of claims 13 to 19, further comprising:
receiving the WUS configuration and the first signal configuration.

21. The method according to any one of claims 2 to 20, wherein the first signal(s) is(are) signal(s) having a first waveform, or the first signal(s) is(are) signal(s) having a second waveform;
wherein the first waveform is obtained based on multi-carrier modulation, and the second waveform is obtained based on single-carrier modulation.

22. The method according to claim 1, wherein performing, through the first receiver, at least one of cell synchronization or measurement evaluation in RRM measurement comprises:
in a case where WUS configuration includes second signal(s), and the WUS configuration and third signal configuration are mutually independent, performing, through the first receiver, the cell synchronization based on the second signal(s) and performing the measurement evaluation based on third signal(s);
wherein the WUS configuration is arranged to configure time-frequency resources for the first receiver to monitor WUS(s), the third signal configuration is arranged to configure time-frequency resources for the first receiver to monitor the third signal(s), the second signal(s) is(are) arranged to perform the cell synchronization, and the third signal(s) is(are) arranged to perform the measurement evaluation.

23. The method according to claim 22, wherein performing the measurement evaluation based on the third signal(s) comprises one or more of the following:
performing the measurement evaluation according to a period of the third signal(s); or
performing the measurement evaluation according to a period of a measurement gap, wherein the measurement gap overlaps time-domain position(s) of at least one of the third signal(s).

24. The method according to claim 22, wherein performing, through the first receiver, the cell synchronization based on the second signal(s) and performing the measurement evaluation based on the third signal(s) comprises:
performing, through the first receiver, the cell synchronization based on second signal(s) within x wake-up periods, and the measurement evaluation based on y third signals;
wherein the wake-up period is a period of the WUS(s), x is a positive integer, and y is a positive integer.

25. The method according to claim 24, wherein RRM measurement time of the terminal device satisfies a measurement time requirement; and
the RRM measurement time comprises: time for performing the cell synchronization using the second signal(s) within the x wake-up periods, and time for performing the measurement evaluation using the y third signals.

26. The method according to any one of claims 22 to 25, wherein the second signal(s) is(are) Tracking Reference Signal(s) (TRS(s)), and the third signal(s) is(are) Channel State Information Reference Signal(s) (CSI-RS(s)).

27. The method according to any one of claims 22 to 26, wherein
the WUS configuration is arranged to configure time-frequency resources for aperiodic WUS burst(s), each or at least one WUS burst includes at least one of the second signal(s), and the third signal configuration is arranged to configure time-frequency resources for aperiodic third signal(s); or
the WUS configuration is arranged to configure time-frequency resources for aperiodic WUS burst(s), each or at least one WUS burst includes at least one of the second signal(s), and the third signal configuration is arranged to configure time-frequency resources for periodic third signal(s); or
the WUS configuration is arranged to configure time-frequency resources for periodic WUS burst(s), each or at least one WUS burst includes at least one of the second signal(s), and the third signal configuration is arranged to configure time-frequency resources for periodic third signal(s); or
the WUS configuration is arranged to configure time-frequency resources for periodic WUS burst(s), each or at least one WUS burst includes at least one of the second signal(s), and the third signal configuration is arranged to configure time-frequency resources for aperiodic third signal(s).

28. The method according to any one of claims 22 to 27, further comprising:
receiving the WUS configuration and the third signal configuration.

29. The method according to any one of claims 2 to 28, further comprising:
reporting a terminal capability, wherein the terminal capability indicates whether the terminal device supports performing the cell synchronization using signal(s) in the WUS configuration;
wherein the signal(s) in the WUS configuration comprises the first signal(s) or the second signal(s), the first signal(s) is(are) arranged to perform the cell synchronization and the measurement evaluation, the second signal(s) is(are) arranged to perform the cell synchronization.

30. The method according to claim 29, wherein the terminal capability comprises a first terminal capability, wherein the first terminal capability indicates that the terminal device supports performing the cell synchronization using the signal(s) in the WUS configuration.

31. The method according to claim 29, wherein the terminal capability comprises a second terminal capability, wherein the second terminal capability indicates that the terminal device does not support performing the cell synchronization using the signal(s) in the WUS configuration, or indicates that the terminal device supports performing the cell synchronization using first signal(s) determined by first signal configuration mutually independent of the WUS configuration.

32. The method according to claim 29, wherein the terminal capability comprises a third terminal capability, wherein the third terminal capability indicates that the terminal device supports performing the cell synchronization using the signal(s) in the WUS configuration and supports performing the cell synchronization using the first signal(s) determined by first signal configuration mutually independent of the WUS configuration.

33. The method according to claim 32, wherein RRM measurement time of the terminal device satisfies a measurement time requirement;
in a case where the RRM measurement is performed before receiving the WUS configuration, the RRM measurement time comprises: time for performing the cell synchronization and time for performing the measurement evaluation using the first signal(s);
in a case where the RRM measurement is performed after receiving the WUS configuration, the RRM measurement time comprises: time for performing the cell synchronization and time for performing the measurement evaluation using the signal(s) in the WUS configuration.

34. The method according to any one of claims 29 to 33, wherein the terminal capability comprises a fourth terminal capability, wherein the fourth terminal capability indicates whether the first receiver supports receiving signal(s) having a first waveform obtained based on multi-carrier modulation.

35. The method according to any one of claims 29 to 34, wherein the terminal capability comprises a fifth terminal capability, wherein the fifth terminal capability indicates whether the first receiver supports receiving signal(s) having a second waveform obtained based on single-carrier modulation.

36. A method for radio resource management (RRM) measurement, wherein the method is performed by a network device, the method comprising:
transmitting signal configuration, wherein the signal configuration is arranged to configure time-frequency resources for at least one type of signal(s);
wherein the at least one type of signal(s) is(are) arranged for the first receiver of a terminal device to perform at least one of cell synchronization or measurement evaluation in RRM measurement, the terminal device is equipped with the first receiver and a second receiver, and power consumption of the first receiver is lower than power consumption of the second receiver.

37. The method according to claim 36, wherein the transmitting the signal configuration comprises:
transmitting wake-up signal (WUS) configuration;
wherein the WUS configuration is arranged to configure time-frequency resources for the first receiver to monitor WUS(s), the WUS configuration includes first signal(s), and the first signal(s) is(are) arranged to perform the cell synchronization and the measurement evaluation.

38. The method according to claim 37, wherein
the WUS configuration is arranged to configure time-frequency resources for aperiodic WUS burst(s), and a WUS burst includes at least one of the first signal(s); or
the WUS configuration is arranged to configure time-frequency resources for periodic WUS burst(s), and a WUS burst includes at least one of the first signal(s).

39. The method according to claim 36, wherein transmitting the signal configuration comprises: transmitting WUS configuration and first signal configuration;
wherein the WUS configuration and the first signal configuration are mutually independent, the WUS configuration is arranged to configure time-frequency resources for the first receiver to monitor WUS(s), the first signal configuration is arranged to configure time-frequency resources for the first receiver to monitor the first signal(s), and the first signal(s) is(are) arranged to perform the cell synchronization and the measurement evaluation.

40. The method according to claim 39, wherein
the WUS configuration is arranged to configure time-frequency resources for aperiodic WUS(s), and the first signal configuration is arranged to configure time-frequency resources for aperiodic first signal(s); or
the WUS configuration is arranged to configure time-frequency resources for aperiodic WUS(s), and the first signal configuration is arranged to configure time-frequency resources for periodic first signal(s); or
the WUS configuration is arranged to configure time-frequency resources for periodic WUS(s), and the first signal configuration is arranged to configure time-frequency resources for periodic first signal(s); or
the WUS configuration is arranged to configure time-frequency resources for periodic WUS(s), and the first signal configuration is arranged to configure time-frequency resources for aperiodic first signal(s).

41. The method according to any one of claims 37 to 40, wherein the first signal(s) is(are) signal(s) having a first waveform, or the first signal(s) is(are) signal(s) having a second waveform;
wherein the first waveform is obtained based on multi-carrier modulation, and the second waveform is obtained based on single-carrier modulation.

42. The method according to claim 36, wherein the transmitting the signal configuration comprises:
transmitting WUS configuration and third signal configuration;
wherein the WUS configuration includes second signal(s), the WUS configuration and the third signal configuration are mutually independent, the WUS configuration is arranged to configure time-frequency resources for the first receiver to monitor WUS(s), the third signal configuration is arranged to configure time-frequency resources for the first receiver to monitor the third signal(s), the second signal(s) is(are) arranged to perform the cell synchronization, and the third signal(s) is(are) arranged to perform the measurement evaluation.

43. The method according to claim 42, wherein
the WUS configuration is arranged to configure time-frequency resources for aperiodic WUS burst(s), the WUS burst(s) includes at least one of the second signal(s), and the third signal configuration is arranged to configure time-frequency resources for aperiodic third signal(s); or
the WUS configuration is arranged to configure time-frequency resources for aperiodic WUS burst(s), the WUS burst(s) includes at least one of the second signal(s), and the third signal configuration is arranged to configure time-frequency resources for periodic third signal(s); or
the WUS configuration is arranged to configure time-frequency resources for periodic WUS burst(s), the WUS burst(s) includes at least one of the second signal(s), and the third signal configuration is arranged to configure time-frequency resources for periodic third signal(s); or
the WUS configuration is arranged to configure time-frequency resources for periodic WUS burst(s), the WUS burst(s) includes at least one of the second signal(s), and the third signal configuration is arranged to configure time-frequency resources for aperiodic third signal(s).

44. The method according to any one of claims 37 to 43, further comprising:
receiving a terminal capability, wherein the terminal capability indicates whether the terminal device supports performing the cell synchronization using a signal in the WUS configuration;
wherein the signal(s) in the WUS configuration comprises the first signal(s) or the second signal(s), the first signal(s) is(are) arranged to perform the cell synchronization and the measurement evaluation, and the second signal(s) is(are) arranged to perform the cell synchronization.

45. The method according to claim 44, wherein the terminal capability comprises a first terminal capability, wherein the first terminal capability indicates that the terminal device supports performing the cell synchronization using the signal(s) in the WUS configuration.

46. The method according to claim 44, wherein the terminal capability comprises a second terminal capability, wherein the second terminal capability indicates that the terminal device does not support performing the cell synchronization using the signal(s) in the WUS configuration, or indicates that the terminal device supports performing the cell synchronization using first signal(s) determined by first signal configuration mutually independent of the WUS configuration.

47. The method according to claim 44, wherein the terminal capability comprises a third terminal capability, wherein the third terminal capability indicates that the terminal device supports performing the cell synchronization using the signal(s) in the WUS configuration and supports performing the cell synchronization using first signal(s) determined by first signal configuration mutually independent of the WUS configuration.

48. The method according to any one of claims 44 to 47, wherein the terminal capability comprises a fourth terminal capability, wherein the fourth terminal capability indicates whether the first receiver supports receiving signal(s) having a first waveform obtained based on multi-carrier modulation.

49. The method according to any one of claims 44 to 48, wherein the terminal capability comprises a fifth terminal capability, wherein the fifth terminal capability indicates whether the first receiver supports receiving signal(s) having a second waveform obtained based on single-carrier modulation.

50. An apparatus for RRM measurement, wherein the apparatus is equipped with a first receiver and a second receiver, power consumption of the first receiver is lower than power consumption of the second receiver, the apparatus comprising:
a performing module, arranged to perform, through the first receiver, at least one of cell synchronization or measurement evaluation in RRM measurement.

51. An apparatus for radio resource management (RRM) measurement, comprising:
a transmitting signal configuration, wherein the signal configuration is arranged to configure time-frequency resources for at least one type of signal(s);
wherein the at least one type of signal(s) is(are) arranged for a first receiver of a terminal device to perform at least one of cell synchronization or measurement evaluation in RRM measurement, the terminal device is equipped with the first receiver and a second receiver, and power consumption of the first receiver is lower than power consumption of the second receiver.

52. A communication device, wherein the communication device comprises:
a processor;
a transceiver connected to the processor;
a memory configured to store executable instructions of the processor;
wherein the processor is configured to load and execute the executable instructions to implement the method for radio resource management (RRM) measurement according to any one of claims 1 to 49.

53. A computer-readable storage medium, wherein the computer-readable storage medium stores a computer program, and the computer program is configured to be loaded and executed by a processor to implement the method for radio resource management (RRM) measurement according to any one of claims 1 to 49.

54. A computer program product, wherein the computer program product comprises computer instructions, the computer instructions are stored in a computer-readable storage medium, and a processor is configured to acquire the computer instructions from the computer-readable storage medium and execute the computer instructions to implement the method for radio resource management (RRM) measurement according to any one of claims 1 to 49.
